(19) Europäisches Patentamt
European Patent Office
Office européen des brevets

(11) **EP 3 022 042 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(21) Anmeldenummer: **14736631.4**

(22) Anmeldetag: **01.07.2014**

(51) Int Cl.:
***B29C 55/20*** **(2006.01)**

(86) Internationale Anmeldenummer:
**PCT/EP2014/001800**

(87) Internationale Veröffentlichungsnummer:
**WO 2015/007367 (22.01.2015 Gazette 2015/03)**

(54) **LINEARMOTORGETRIEBENE TRANSPORTANLAGE, INSBESONDERE RECKANLANGE**

LINEAR-MOTOR-DRIVEN CONVEYING SYSTEM, IN PARTICULAR STRETCHING SYSTEM

INSTALLATION DE TRANSPORT FONCTIONNANT AVEC UN MOTEUR LINÉAIRE, NOTAMMENT INSTALLATION D'ÉTIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2013 DE 102013011965**

(43) Veröffentlichungstag der Anmeldung:
**25.05.2016 Patentblatt 2016/21**

(73) Patentinhaber: **Brückner Maschinenbau GmbH & Co. Kg**
**83313 Siegsdorf (DE)**

(72) Erfinder:
• **GUMPINGER, Helmut**
**83454 Anger (DE)**

• **GIAPOULIS, Antimos**
**83278 Traunstein (DE)**
• **DUSCH, Manfred**
**83404 Ainring (DE)**
• **EISELMAYER, Wolfgang**
**A-5760 Saalfelden (AT)**
• **ADLER, Jens**
**83313 Siegsdorf (DE)**

(74) Vertreter: **Flach, Dieter Rolf Paul et al**
**Andrae I Westendorp**
**Patentanwälte Partnerschaft**
**Adlzreiterstrasse 11**
**83022 Rosenheim (DE)**

(56) Entgegenhaltungen:
**DE-A1-102007 057 329    US-A- 5 072 493**

**Beschreibung**

Die Erfindung betrifft eine linearmotorgetriebene Transportanlage, insbesondere Reckanlage in Form einer Simultan-Reckanlage nach dem Oberbegriff des Anspruchs 1.

Reckanlagen finden insbesondere bei der Kunststofffolien-Herstellung Anwendung. Bekannt sind sogenannte Simultan-Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Die zu reckende Materialbahn, in der Regel also ein Kunststofffilm, wird mittels Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in derdie gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/oder Wärmenachbehandlung unterzogen werden kann.

Das eingangs erwähnte simultane oder sequentielle Transportsystem, insbesondere in Form einer simultanen oder sequentiellen Reckanlage, umfasst üblicherweise zwei symmetrisch zu einer vertikalen Symmetrieebene angeordnete, umlaufende Führungsbahnen, wobei jede Führungsbahn eine teilweise oder ganz umlaufende Führungsschiene umfasst (beispielsweise neben Antriebs-oder Umkehrrädern), längs derer die Transportelemente auf der Führungsbahn verfahren bzw. bewegt werden. Diese Transporteinheiten umfassen üblicherweise Kluppeneinheiten und Antriebseinheiten, die teilweise auch als Transportteile bezeichnet werden. Die Führung und Kraftaufnahme der Transportteile auf der Führungsschiene kann dabei über Gleitelemente, über Rollenelemente oder über eine Kombination aus Gleit- und Rollenelementen erfolgen.

Die Transportteile sind dabei vom jeweiligen Antriebssystem des Transportsystems abhängig. Wird das Transportsystem beispielsweise mittels einer Kette angetrieben, dann wird das Kluppenteil direkt oder über eine Brücke mit dem Kettenteil verbunden. Diese Kettenteile stellen dabei einen integralen Bestandteil der Transporteinheit dar. Ein derartiges Transportsystem, bei welchem ein Kettenantrieb mit Kettenteilen verwendet wird, die längs einer Führungsschiene beispielsweise über horizontal und vertikal drehende Laufrollen gelagert ist, ist beispielsweise aus der DE 44 36 676 C2 bekannt geworden. Daraus ist auch zu entnehmen, dass anstelle der erwähnten Laufrollen unter Umständen auch teilweise andere Führungsmittel, beispielsweise unter Verwendung einer Gleitlagerung eingesetzt werden können.

Ein Transportsystem mit einer Rollenlagerung ist zudem aus der EP 0 471 052 B1 als bekannt zu entnehmen. In all diesen Fällen erfolgt also der Antrieb des gesamten Transportsystems über eine Transportkette.

Demgegenüber sind auch Transportsysteme und insbesondere Simultan-Reckanlagen bekannt geworden, bei denen die einzelnen Transporteinheiten nicht über eine Transportkette (als integraler Bestandteil des Antriebssystems), angetrieben werden, sondern der Antrieb auf der Basis von Linearmotoren erfolgt. Ein derartiges, linearmotorgetriebenes Transportsystem ist beispielsweise aus der WO 89/12543 A1 oder aus der DE 44 41 020 C1 als bekannt zu entnehmen.

Diese linearmotorgetriebenen Transportsysteme und insbesondere Reck-und Simultan-Reckanlagen sind in der Regel so aufgebaut, dass das Kluppenteil über eine Brücke mit der eigentlichen Antriebs- bzw. Transporteinheit verbunden ist. Die Einleitung der Antriebskräfte erfolgt über beispielsweise angeflanschte Sekundärteile, beispielsweise in Form sogenannter Permanentmagnete (unter Verwendung eines zugehörigen Magnetkäfigs), die an den sogenannten Antriebs- bzw. Transporteinheiten mit diesen mitverfahrbar angebracht sind. Dabei können zwischen den über einen Linearmotorantrieb angetriebenen Transporteinheiten auch leerlaufende Transporteinheiten vorgesehen sein, sogenannte "Idler", die mit keinem derartigen Sekundärteil unter Verwendung von Permanentmagneten ausgestattet sind. Ansonsten sind allerdings diese nicht angetriebenen Transporteinheiten konstruktiv entsprechend den angetriebenen Transporteinheiten ausgestaltet und werden ebenso über die zu reckende Materialbahn, in der Regel über die, den zu reckenden Kunststofffolienfilm eingeleiteten Filmkräfte mitbewegt, da die entsprechenden Kluppen den Filmrand während des Durchlaufs in Abzugsrichtung der Folienbahn erfassen. Die über den Linearmotor angetriebenen Transporteinheiten bewegen über die Kluppeneinheiten damit den zu reckenden Kunststofffilm durch die Folienanlage, wobei die dazwischen sitzenden, nicht angetriebenen Transporteinheiten dann über den die Anlage hindurch bewegten Kunststofffilm mitbewegtwerden.

Die Führung der Transporteinheiten innerhalb der Führungsschiene und/oder auf der Tragschiene kann je nach Transportsystem über Gleit- und/oder Rollenleiteinrichtungen oder über Rolleneinheiten oder einer Kombination von beiden erfolgen.

Der Vorschub mit Permanentmagneten, den sogenannten mit Sekundärteilen ausgestatteten Transporteinheiten, erfolgt über sogenannte Primäreinheiten, d.h. längs der Führungsbahn ortsfest vorgesehener Spulen und Wicklungen, über die entsprechende elektromagnetische Felder erzeugt werden können, mittels derer dann die mit den Permanentmagneten (Sekundärteilen) ausgestatteten Transporteinheiten längs der Führungsbahn fortbewegt werden.

Dabei ist es aus dem Stand der Technik bekannt, beispielsweise aus der EP 0 422 035 B1 oder der EP 0 455 632 B1, dass bei derartigen, linearmotorgetriebenen Reckanlagen die Anordnung der Primär- und Sekundärteile symmetrisch zur Führungsbahn, d.h. zur Führungsschiene erfolgt, wobei sich dann die Anziehungskräfte der Motoren, die auf der Oberseite wie auch der Unterseite der Transporteinheiten vorgesehen sind, annähernd aufheben.

Daneben sind aber auch asymmetrische Anordnungen bekannt. So ist beispielsweise aus der bereits vorstehend zitierten EP 0 422 035 B1 ein asymmetrisches System anhand von Figur 13 als bekannt zu entnehmen. Ein asymmetrisches System beschreibt auch die Anlage, die aus der JP 2002-103445 (dort in Figur 4 und 5) bekannt ist, wobei hierdurch allerdings der Nachteil verbunden ist, dass diese Systeme zu einer ungünstigen Krafteinleitung führen. Die Folge davon ist, dass es zu hohen Belastungen der Bauteile kommt und/oder dass sehr komplexe Strukturen der Primärteile in den Kurvenabschnitten notwendig werden.

Allerdings weist auch ein symmetrischer Aufbau bezüglich der Anordnung der oben und untenliegenden Linearmotorantriebe Nachteile auf. Problematisch ist in diesem Fall, dass sich durch die symmetrische Krafteinleitung durch einen oberhalb der Führungsschiene liegenden Linearantrieb und einen unterhalb der Schiene liegenden Linearantrieb die Kräfte quasi in Vertikalrichtung aufheben, mit der Folge, dass die Transporteinheit, d.h. die Kluppe quasi schwerelos auf den Schienen laufen kann. Dies kann dann allerdings zu Schwingungen führen, welche durch die Nutteilung bzw. die Nutrastkräfte hervorgerufen werden. Diese Schwingungen sind letztlich für Lagerschäden und undefinierte Bewegungszustände, insbesondere im Rücklaufbereich der Reckanlage, verantwortlich.

Aufgabe der vorliegenden Erfindung ist es demgegenüber, einen verbesserten Linearmotorantrieb für eine Transportanlage, insbesondere für eine Reckanlage und dabei eine Simultan-Reckanlage zu schaffen, der einen stabilisierten Lauf der Transporteinheiten bei geringer Belastung ermöglicht.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die vorliegende Erfindung geht von der Erkenntnis aus, dass eine zusätzliche geringe stabilisierende Kraft zur Vermeidung oder Unterdrückung von Schwingungen durch Verwendung eines asymmetrischen Linearmotorantriebes erzeugt werden kann.

Mit anderen Worten ist im Rahmen der Erfindung vorgesehen, dass der asymmetrische Linearmotorantrieb vor allem nur in Form eines unterhalb der Transporteinheit befindlichen Linearmotorantriebes vorgesehen ist, der durch Wegfall des gegenüberliegenden oberen Linearmotorantriebs neben den Gravitationskräften, die auf die Transporteinheiten wirken, zudem Anziehungskräfte ausübt, die zusätzlich zur Stabilisierung des Gesamtsystems beitragen.

Ebenso wäre in einer alternativen Lösung denkbar, dass der nur einseitig vorgesehene Linearmotorantrieb nicht unterhalb, sondern oberhalb der Transporteinheiten vorgesehen ist.

Diese beiden Lösungen haben zudem den Vorteil, dass die Bauhöhe des Transportsystems, und damit auch der Abstand der Heizregister (nozzle boxes) im Ofen reduziert werden kann. Dadurch erreicht man eine Verringerung des Energiebedarfes für die Prozesswärme. Außerdem muss nur eine Reihe von Linearmotor-Primärteilen gekühlt werden. Insgesamt erreicht man neben der Stabilisierung des Transportsystems eine deutliche Reduzierung des Energiebedarfes des Ofens.

Schließlich kann im Rahmen der Erfindung auch ein asymmetrischer Linearmotorantrieb insoweit vorgesehen sein, als sowohl oberhalb wie unterhalb der Führungsbahn und insbesondere der Führungsschiene ein Linearmotorantrieb vorgesehen ist, die sich jedoch in ihrer Leistung unterscheiden. Der eine Linearmotorantrieb soll dabei schwächer ausgebildet sein als der andere. Beispielsweise soll bevorzugt der obenliegende Linearmotorantrieb maximal nur 75% der Kraft und damit auch nicht mehr als 75% der Anziehungskraft des unterhalb der Führungsschiene realisierten Linearmotorantriebes aufweisen. Möglicherweise kann der schwächer ausgebildete Linearmotorantrieb auch nur 60%, 50% oder 40% und weniger an Leistung, Kraft und insbesondere Anziehungskraft erzeugen, bezogen auf den jeweils stärkeren Linearmotorantrieb. Bevorzugt sind dabei der schwächere Linearmotorantrieb und der stärkere Linearmotorantrieb untenliegend, d.h. unterhalb der Führungsschiene ausgebildet.

Diese Maßnahmen würden allerdings für sich genommen nicht dazu beitragen, die gewünschten erfindungsgemäßen Vorteile in ausreichendem Maße zu realisieren.

Obgleich - wie eingangs erörtert - auch im Stand der Technik bereits asymmetrische, linearmotorgetriebene Systeme bekannt geworden sind, haben diese bekannt gewordenen Systeme allerdings keinen Beitrag dazu geleistet, dass die asymmetrisch eingeleiteten Antriebskräfte gleichzeitig auch als Anziehungskraft zur Stabilisierung der einzelnen Transporteinheiten verwendet werden kann. Insbesondere hier schlägt die Erfindung weitergehende Schritte vor.

Von daher hat sich im Rahmen der Erfindung auch gezeigt, dass sich eine weitere Verbesserung des Laufverhaltens, d.h. eine weitere Verbesserung der Stabilisierung des Laufverhaltens und eine Verringerung oderVermeidung von unerwünschten Schwingungen an den einzelnen Transporteinheiten dadurch realisieren lässt, dass die Angriffsebene an den Kluppen einen bestimmten Abstand zur Motoroberseite (wenn der Linearmotorantrieb unterhalb der Führungsschiene ausgebildet ist) und/oder einen bestimmten Abstand zur Motorunterseite haben muss, wenn ein Linearmotorantrieb alternativ oder zusätzlich oberhalb der Führungsschiene vorgesehen ist. Die erwähnte Angriffsebene an den Kluppen ist im Falle einer Reckanlage jene Ebene, in der der zu reckende Film mittels der Kluppe am Kluppentisch eingeklemmt gehalten wird, also die Filmebene, über die die am Reckvorgang entsprechenden Kräfte wirken.

Schließlich muss aber auch die Magnetlänge der Sekundärteile in einem bestimmten Verhältnis zu dem vorstehend erwähnten Abstand zur Motoroberseite bzw. Motorunterseite der unterhalb oder oberhalb vorgesehenen Linearmotorantriebe stehen. Dadurch ist es möglich sicherzustellen, dass die Krafteinleitungen durch die bevorzugt unterhalb oder oberhalb vorgesehenen Sekundärteile (Magnete) nicht dazu beitragen, dass unerwünschte Schwingungen entstehen.

Schließlich hat sich auch noch gezeigt, dass die gesamte Anordnung nur dann zu befriedigenden Ergebnissen führt, wenn eine sogenannte Führungslänge, d.h. der Abstand zwischen den Rollen und/oder den Gleitlagern in Verfahrrichtung betrachtet kleiner ist als die erwähnte Magnetlänge der Sekundärteile. Diese Führungslänge wird bei Rollenlagern durch das Zentrum der Lagerachse festgelegt. Bei der Verwendung von Gleitlagern wird die Führungslänge durch den Abstand zwischen dem Mittelpunkt eines ersten Gleitlagers zum Mittelpunkt eines in Fahrtrichtung benachbarten Gleitlagers definiert.

Im Rahmen der Erfindung sind aber noch weitere bevorzugte Ausführungsformen möglich.

So ist es insbesondere bei Verwendung lediglich eines Linearmotorantriebes unterhalb der Führungsbahn möglich, dass auf die unterhalb der Führungsbahn ansonsten um Horizontalachsen drehenden Gegen- oder Stützrollen verzichtet werden kann. Denn auf die Transporteinheiten wirken nicht nur die Gravitationskräfte, sondern auch noch die Anziehungskräfte des unterhalb der Transporteinheit ausgebildeten Linearmotorantriebes.

Insbesondere in diesem Fall können anstelle der ansonsten üblichen, im Querschnitt rechteckförmigen Führungsbahn auch völlig anders ausgebildete Führungsbahnen eingesetzt werden, beispielsweise Führungsbahnen, bei welchen die um Horizontalachsen drehenden Laufrollen oder Gleitelemente voneinander an weiter entfernten Positionen an einem Querträger der Führungsschiene zumindest mittelbar abgestützt sind.

Günstig ist ebenfalls, wenn der Schwerpunkt einer Transporteinheit einschließlich einer zugehörigen Kluppe von einer durch die Führungsschiene verlaufenden mittleren Vertikalebene nur bis zu einem Maximalmaß abweicht. Da der Kraftangriff somit mittiger an der Transporteinheit erfolgt, wird ein unerwünschter Kippeffekt vermieden.

Schließlich hat sich auch herausgestellt, dass der maximale Abstand des Schwerpunktes einer Kluppenantriebseinheit von der Mitte der Führungsschiene noch von einer weiteren Größe abhängt, nämlich von dem vorgegebenen Seitenversatz eines oberen Rollenpaares, welches auf der Oberseite der Führungsschiene abrollt, worüber das Gewicht und die über den Linearmotorantrieb eingeleiteten Anziehungskräfte der jeweiligen Kluppen-/Transporteinheit abgestützt werden.

Schließlich soll auch noch erwähnt werden, dass es sich im Rahmen der Erfindung als günstig erwiesen hat, wenn die auf der Oberseite einer Führungs- und/oder Tragschiene längs verfahrbaren Tragrollen und/oder Gleitelemente durch die Linearmotorantriebsanordnung symmetrisch belastet werden.

Die erfindungsgemäße Lösung ist umso überraschender, als bisher stets ein asymmetrischer Linearmotorantrieb vermieden wurde. Man vermutete bisher, dass ein derartiger, asymmetrischer Aufbau des Linearmotorantriebs nicht nur zu einer Verringerung der gesamten erzeugten Antriebskräfte führt (insbesondere dann, wenn nur an der Unterseite oder der Oberseite ein einziger Linearmotorantrieb vorgesehen ist), sondern dass dadurch auch die Laufrollen- und/oder Gleitelementbelastung durch die Anziehungskraft nachteilig verändert wird, wenn beispielsweise nur ein einziger, unten sitzender Linearmotorantrieb vorgesehen ist, so dass sich die Gewichts- und die Antriebskräfte addieren.

Umso überraschender ist es, dass durch den asymmetrischen Linearmotorantrieb es letztlich möglich ist, die Anziehungskraft zwischen den Primär- und Sekundärteilen als stabilisierende Kraft für die gesamte Anlage zu verwenden.

Durch die im Rahmen der Erfindung mögliche Nutzung der Anziehungskraft zwischen den Primär- und Sekundärteilen des Linearmotorantriebs als stabilisierende Kraft werden Schwingungen vermieden, die bisher immer aufgetreten sind. Die Transporteinheiten weisen dabei in allen Betriebszuständen einen ruhigen Lauf auf.

Ferner lässt sich im Rahmen der Erfindung auch der Energieverbrauch minimieren. Zudem kann die Bauhöhe des Systems deutlich reduziert werden, was zu einem geringeren Abstand im Ofen zwischen der Folie und der Belüftung führt. Dadurch reduziert sich wiederum die nötige Luftmenge und damit die Ventilator- und Heizleistung. Zudem wird die Gesamtbauhöhe des Ofens geringer, was zu niedrigeren Investmentkosten führt.

Bisherige Antriebssysteme haben durch die doppelreihige Anordnung der Motoren in einem Ofen größere Verluste aufgewiesen. Durch die insgesamt geringere Bauhöhe können die Abstände der Düsenkästen (nozzle boxes) deutlich reduziert werden. Es wird also deutlich weniger Heizleistung für den Ofen benötigt, um den Film auf der geeigneten Prozesstemperatur zu führen. Zudem wird nur noch die Kühlleistung für eine Motorreihe der Linearmotoren benötigt.

Die vorliegende Erfindung mit bevorzugt nur einer Linearmotorreihe (bevorzugt unterhalb der Transporteinheiten) benötigt deutlich weniger Kühlleistung, wodurch auch der Energieverbrauch, d.h. die Heizleistung des Ofens ebenfalls deutlich gesenkt wird, die notwendig ist, um die zu reckende Materialbahn, insbesondere in Form eines Kunststofffilms jeweils auf die benötigte Recktemperatur zu bringen bzw. zu halten.

Die Erfindung wird nachfolgend anhand von Zeichnungen näher erläutert. Dabei zeigen im Einzelnen:

Figur 1a: eine schematische Draufsicht auf eine Simultan-Reckanlage mit einer gemeinsamen Trägerstruktur für die Prozessseite und die Rücklaufseite innerhalb eines Ofens;

Figur 1b: eine zu Figur 1 a abgewandelte Ausführungsform einer zur Prozessseite getrennten Rücklaufseite für die Kluppen-Transporteinheiten;

Figur 2: eine schematische Querschnittsdarstellung quer zur Längsrichtung der Führungsschiene einer Simultan-Reckanlage zur Verdeutlichung eines ersten Ausführungsbeispiels einer linearmotorgetriebenen Kluppen-Transporteinheit;

Figur 3: ein zu Figur 2 abgewandeltes Ausführungsbeispiel lediglich mit einem untenliegenden Linearmotorantrieb;

Figur 4: ein zu Figur 3 abgewandeltes Ausführungsbeispiel lediglich mit einem nur oberhalb der Führungsschiene ausgebildeten Linearmotorantriebs;

Figur 5: eine räumliche Darstellung einer Kluppen-Transporteinheit unter Erläuterung der auftretenden und daran ansetzenden Kräfte;

Figur 6a: eine schematische Seitenansicht eines abgewandelten Ausführungsbeispiels zur Verdeutlichung eines vorgegebenen Höhenabstandes zwischen einer Folienebene und einer Motorangriffsebene eines untenliegenden Linearmotors;

Figur 6b: ein zu Figur 6a abgewandeltes Ausführungsbeispiel mit unterhalb der Motorangriffsebene liegenden Folienebene ebenfalls bei untenliegendem Linearmotorantrieb;

Figur 7: eine schematische Seitenansicht quer zur Vorschubsrichtung einer Kluppen-Transporteinheit zur Verdeutlichung weiterer konstruktiver Maßnahmen und Bedingungen zur Verbesserung des Laufverhaltens;

Figur 8: eine Querschnittsdarstellung durch eine Kluppen-Transporteinheit zur Verdeutlichung eines maximalen Seitenabstandes des Schwerpunktes der Kluppen-Transporteinheit bezogen auf eine die Führungsschiene mittig und vertikal durchsetzende Führungsschienenebene;

Figur 9: eine zu Figur 8 vergleichbare Darstellung zur Verdeutlichung eines maximalen Seitenabstandes zwischen Führungsrollen zur Verminderung einer Gefahr eines seitlichen Verkippens;

Figur 10: eine Querschnittsdarstellung durch ein abgewandeltes Ausführungsbeispiel einer Kluppen-Transporteinheit; und

Figur 11: eine nochmalige Abwandlung einer Kluppen-Transporteinheit in Querschnittsdarstellung.

Die nachfolgend erörterte linearmotorgetriebene Transportanlage ist anhand einer Simultan-Reckanlage erläutert.

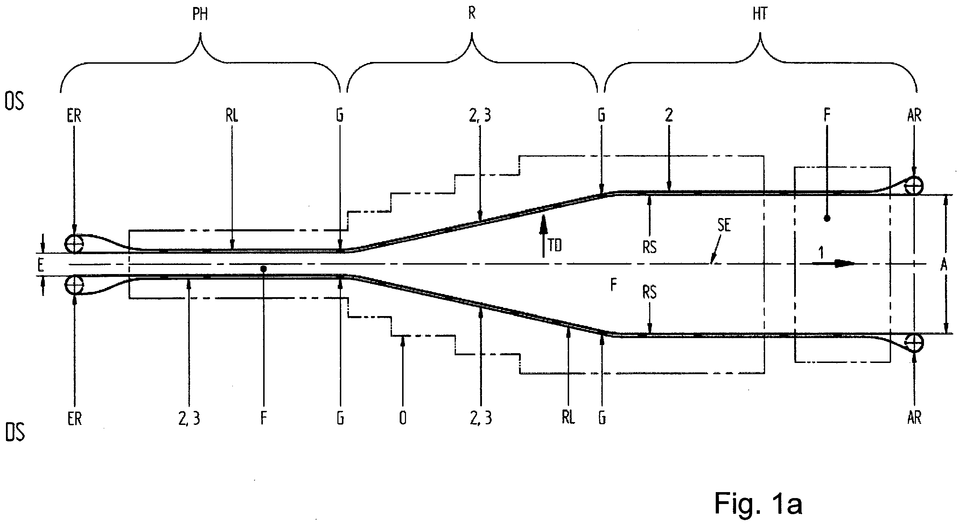

Eine derartige Reckanlage weist zwei symmetrisch ausgebildete Antriebssysteme auf, die symmetrisch zu einer mittleren, vertikal zurZeichenebene verlaufenden Symmetrie-Ebene SE liegen. In Figur 1a sind die beiden symmetrisch zur Symmetrie-Ebene SE in Abzugsrichtung 1 angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 hindurch bewegt wird.

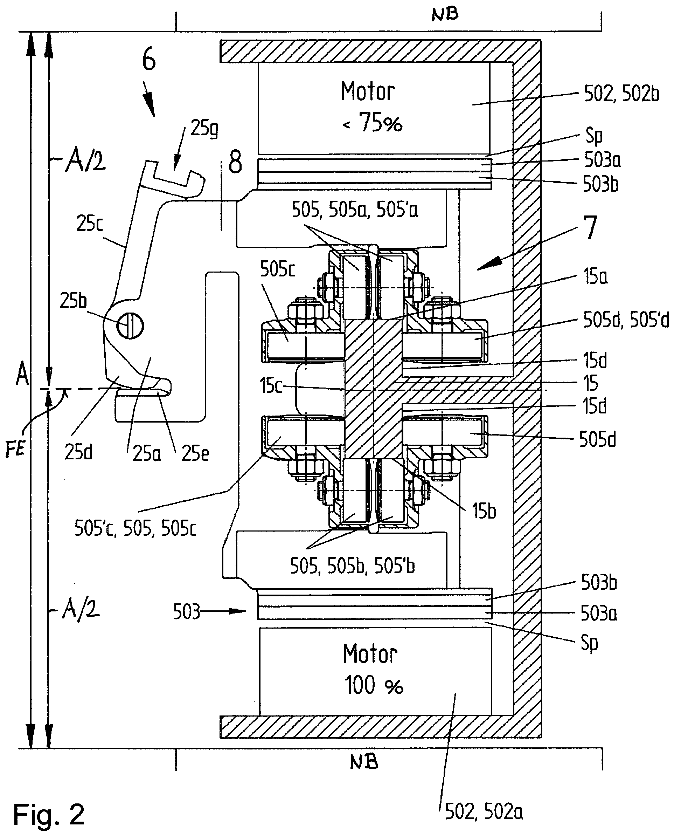

Eine unverstreckte Folie F (wobei im Folgenden von Folie gesprochen wird, obgleich mit einer derartigen Reckanlage allgemein eine Behandlungsbahn F entsprechend behandelt und simultan längs und quer gereckt werden kann, so dass die Erfindung insoweit nicht auf eine Kunststofffolienbahn beschränkt ist) läuft im Einlaufbereich E in die Reckanlage ein und wird dort von nachfolgend noch erörterten Kluppen, wie sie beispielsweise anhand von Figur 2 gezeigt sind, an beiden Rändern 8 ergriffen und eingeklemmt, und zwar auf der sogenannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier simultan in Längs- und Querrichtung verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Simultan-Reckanlage.

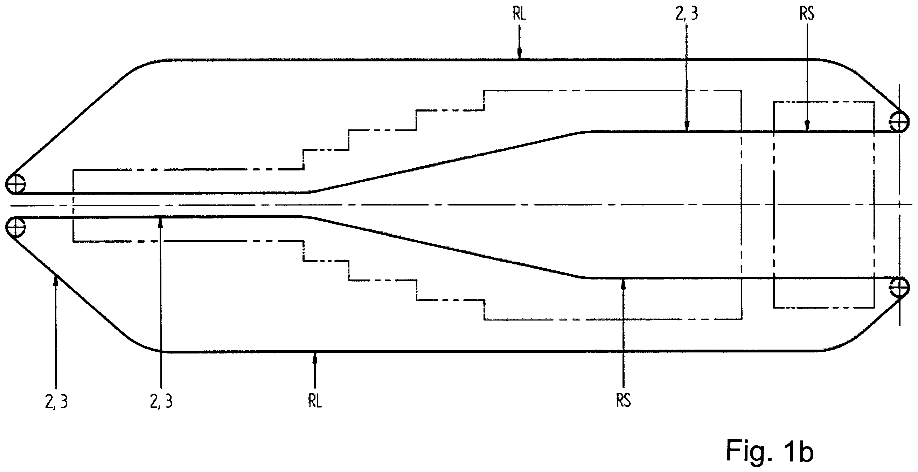

Ansonsten kann - wie auch anhand von Figur 1b gezeigt ist - die Führungsschiene im Vorlauf und damit im Reckbereich sowie im Rücklaufbereich abweichend verlaufen, nämlich derart, dass beispielsweise nur die Führungsschiene durch einen Ofen O verläuft und auf der Rücklaufseite außerhalb des Ofens zurückgeführt ist. Es wird insoweit auf bekannte Reckanlagen und zugehörige Aufbauten verwiesen.

Nachfolgend wird auf Figur 2 Bezug genommen, in welcher eine Querschnittsdarstellung einer linearmotorgetriebenen Simultan-Reckanlage mit einem zugehörigen Kluppen- und Transportteil gezeigt ist.

Aus Figur 2 ist also eine Kluppen-Transporteinheit KT zu ersehen, welches das sogenannte Kluppenteil 6 und das sogenannte Transportteil 7 umfasst. Das Kluppenteil 6 ist mit dem Transportteil 7 über eine sogenannte Brücke 8 verbunden. Je nach Sichtweise kann die Kluppen-Brücke 8 zum Transport- oder zum Kluppenteil hinzugerechnet werden. Unter diesem Brückenteil 8 befindet sich dann eine nach unten hin offene U-förmige Öffnung, wodurch das Kluppenteil 6 von dem eigentlichen Transportteil 7 leicht abgesetzt ist.

Das Kluppenteil umfasst wie üblich einen Kluppenhebel 25c, derteilweise auch als Messerklappe 25c bezeichnet wird. Dieser Kluppenhebel 25c kann um eine parallel zur Führungsschiene verlaufende Kluppenachse 25b verschwenkt werden, und zwar derart, dass der Kluppenhebel 25c zwischen einer Öffnungsund einer Schließstellung hin und her kippen kann. Bei Bedarf können auch beispielsweise zwei in Richtung der Führungsschiene versetzt hintereinander liegende separat verschwenkbare Kluppenhebel vorgesehen sein.

Der aus der Figur ersichtliche Kluppenmechanismus oder -abschnitt 25 umfasst ferner eine Kluppenhalterung 25a, die beispielsweise aus zwei in Horizontalrichtung versetzt liegenden Kluppenwangen besteht oder diese umfasst. Zwischen diesen verläuft die erwähnte horizontale Kluppenachse 25b, mittels derer dann der entsprechende Kluppenhebel 25c (auch Messerklappe 25b genannt) wie erläutert zwischen einer Freigabestellung und einer Fixierstellung verschwenkbar ist, in welcher sein untenliegender Greif- oder Fixierabschnitt 25d, beispielsweise eine Transportbahn bzw. im Falle einer Folienreckanlage ein Film, zwischen der Greifffläche 25d und einem Kluppentisch 25e fixiert, d.h. eingeklemmt und festgehalten werden kann.

Am oberen Ende des Kluppenhebels 25c befindet sich also gegenüberliegend zu seinem Klemmabschnitt 25d ein beispielsweise im Querschnitt quer zur Führungsschiene verlaufendes U-förmig geformtes Magnetschlussteil 25g, welches mit einem entsprechenden Mechanismus längs der Führungsschiene so zusammenwirkt, dass der Kluppenhebel im Einlaufteil den Rand einer Transport- oder Filmbahn am Transporttisch festklemmt und am Ende der Reckanlage durch Verschwenken des Kluppenhebels in Öffnungsstellung wieder frei gibt.

Der eigentliche Aufbau der linearmotorgetriebenen Simultan-Reckanlage mit dem entsprechenden Linearmotorantrieb ist beispielsweise aus der EP 0 455 632 B1 oder der DE 44 36 676 C2 als bekannt zu entnehmen, auf deren Offenbarungsgehalt in vollem Umfang Bezug genommen wird. Die anhand von Figur 2 im Querschnitt gezeigte Darstellung gibt die Führungs- und Tragschiene 15 wieder, woraus ersichtlich ist, dass diese Führungsschiene einen rechteckförmigen Querschnitt aufweist, und zwar mit einer oberen horizontalen Laufläche 15a, einer unteren horizontalen Begrenzungs- oder Laufläche 15b sowie zwei vertikal ausgerichtete Laufflächen, nämlich eine erste vertikal ausgerichtete Laufläche 15c, die kluppenseitig liegt sowie eine dazu gegenüberliegende, also kluppenabseitig ausgerichtete vertikale Laufläche 15d.

Im erläuterten Ausführungsbeispiel laufen auf jeder Laufläche jeweils zumindest ein Paar von Laufrollen 505, nämlich ein obenliegendes Laufrollenpaar 505a, die um eine Horizontalachse drehen. Über dieses Laufrollenpaar wird das gesamte Gewicht des zugehörigen Transportteiles mit dem damit verbundenen Kluppenteil aufgenommen und abgestützt.

Im gezeigten Ausführungsbeispiel ist noch ein untenliegendes Rollenpaar 505b vorgesehen, das ebenfalls um eine horizontale Drehachse dreht und auf der unteren Laufläche 15b abrollt. Dieses Rollenpaar dient lediglich zur Sicherheit, damit das betreffende Transportteil mit dem zugehörigen Kluppenteil mit der Führungsschiene nach oben hin nicht abheben kann. Allerdings sind die üblichen Gewichte und die nachfolgend noch erörterten Anziehungskräfte bezüglich des Linearmotorantriebes ausreichend, so dass unter Umständen auf dieses untenliegende Rollenpaar 505b verzichtet werden kann.

Schließlich ist auch noch auf der Kluppenseite ein Rollenpaar 505c und gegenüberliegend ein Rollenpaar 505d vorgesehen, das an den betreffenden vertikalen Laufflächen 15c und 15d abrollt. Darüber ist das Transportteil 7 geführt und gelagert. Die entsprechende Führungsschiene 15 ist über mehrere in Längsrichtung der Führungsschiene versetzt liegende Horizontalträger in Abständen gehalten, die jeweils in dem kluppenabseitig liegenden Freiraum 401 zwischen dem oberen und unteren Laufrad 505d verlaufen und mit der Führungsschiene fest verbunden sind.

Anstelle der erwähnten Laufrollen oder Laufräder 505 können aber auch entsprechende Gleitelemente 505' vorgesehen sein, beispielsweise Gleitelemente 505'a, 505'b, 505'c und 505'd. Ebenso sind gemischte Ausführungsformen teilweise unter Verwendung von Laufrädern und teilweise unter Verwendung von Gleitelementen möglich.

Das entsprechende Transportteil wird über Linearmotoren angetrieben, die ortsfeste Primärteile 502 und mit den Kluppen-Transportteilen KT mitbewegliche Sekundärteile 503 umfassen. Mit anderen Worten werden längs der Führungsschiene 15, die hier auch als Transportschiene 15 gleichzeitig dient (Monorail), die Kluppen, also die Kluppenteile 6, mit den Transportteilen 7 mittels der Primärteile 502 und der Sekundärteile 503 längs verfahren und bewegt.

Die erwähnten Primärteile 502 sind parallel zur Führungs- und Tragschiene 15 angebracht. Die Sekundärteile 503 bestehen aus den erwähnten Permanentmagneten 503a, die in einem jeweiligen Haltekäfig 503b befestigt sind, der wiederum an dem Kluppenkörper 6 gehalten ist.

Wie aus Figur 2 und auch den Folgezeichnungen zu ersehen ist, ist zwischen dem Primär- und Sekundärteil 502, 503 ein geringer Abstandsspalt Sp ausgebildet, überwelchen hinweg die vom Primärteil erzeugten elektromagnetischen Wellen auf den Permanentmagneten 503 a am Transportteil einwirken und dadurch das Transportteil in Vorschubrichtung bewegen.

Abweichend zum gezeigten Ausführungsbeispiel könnte anstelle der Rollenlager ganz oder teilweise auch ein Gleitlager vorgesehen sein, wobei dann die sogenannten Laufflächen an der Führungsschiene als Gleitflächen 15a-15d ausgebildet sind, die bevorzugt mit besonders reibungsarmen gleitfähigen Schichten überzogen sind.

Um möglicherweise vor allem auf der Rücklaufseite der Reckanlage auftretende Schwingungen an den Transportteilen und damit an den Kluppen zu verringern, ist nunmehr erfindungsgemäß vorgesehen, dass beispielsweise der obere oder der untere, vorzugsweise jedoch das obere Primärteil (Motor) des Linearmotorantriebs mit einer schwächeren Leistung und vorzugsweise mit einer sehr viel kleineren Leistung ausgestattet ist als der untere Linearmotorantrieb 502, 502a. Vorzugsweise soll die Leistung, also die von dem oberen Primärteil 502, 502b erzeugte Kraft einschließlich Vorschubkraft und Anziehkraftweniger als 75%, insbesondere weniger als maximal 70%, 60%, 50%, 40%, 30%, 25% oder 20% der entsprechenden Kraft, d.h. Antriebskraft und/oder Anziehungskraft betragen, die von dem unteren Primärteil 502, 502a erzeugt werden kann.

Zur Verdeutlichung der Energieeinsparmöglichkeiten sind hier die Düsenkästen NB (nozzle boxes) schematisch angedeutet, und zwar einmal in Form eines obenliegenden Düsenkastens NB und eines untenliegenden Düsenkastens NB, zwischen denen die zu bearbeitende Transportbahn F, insbesondere ein zu reckender Kunststofffolienfilm durch die Anlage hindurchgeführt wird.

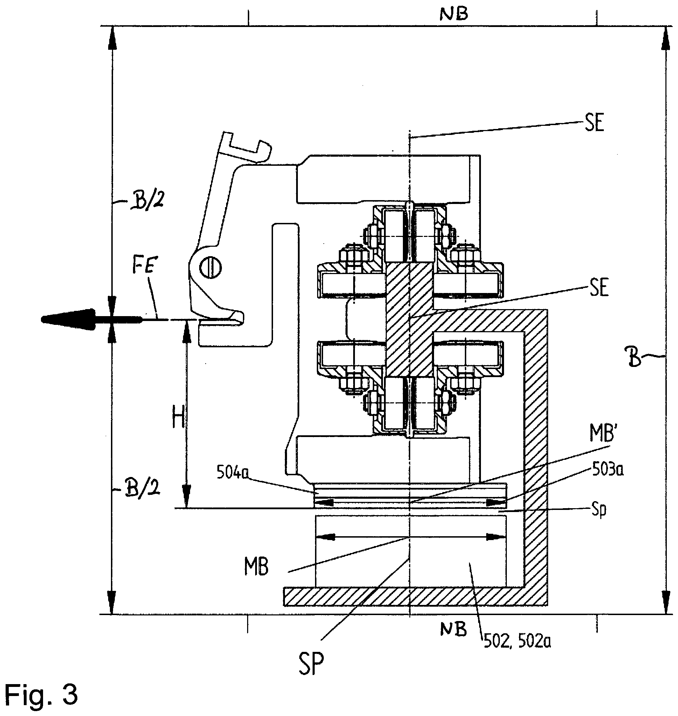

Die in Figur 2 wie in Figur 3 im Querschnitt sichtbaren Düsenkästen NB liegen stets symmetrisch zur Folienebene FE, bei doppelseitigen Motoren also im Abstand A/2, wie dies in Figur 2 eingezeichnet ist. Bei einer asymmetrischen Anordnung der Motoren, insbesondere bei Verwendung nur eines vorzugsweise unterhalb der Führungsschiene vorgesehenen Linearmotor-Antriebes, wird Bauraum eingespart. In diesem Fall können die beiden in Vertikalrichtung übereinander liegenden Düsenkästen NB in einem Abstand B angeordnet werden, der kleiner ist der Abstand A zwischen den Düsenkästen gemäß Ausführungsbeispiel nach Figur 2, wenn ein obenliegender und ein untenliegender Linearmotor-Antrieb verwendet wird. Aber auch bei dem Ausführungsbeispiel gemäß Figur 3 mit nur einem untenliegenden Linearmotor-Antrieb muss die Filmebene symmetrisch, d.h. mittig zwischen den beiden Düsenkästen NB zu liegen kommen, weshalb die Kluppe mit dem Kluppentisch so geformt und positioniert ist, dass die Transportbahn und damit der Kunststofffolienfilmjeweils im Abstand B/2 vom oberen wie vom unteren Düsenkasten entfernt liegt. Da also bei asymmetrischen Anordnungen der Abstand B < A ist, können also Düsenkästen im Abstand B/2 mittensymmetrisch zur Folienebene angeordnet sein (wobei A beispielsweise einen Wert zwischen 250 mm und 700 mm aufweisen kann. Demgegenüber kann der Wert für B Werte beispielsweise von 150 mm bis 700 mm aufweisen, also vor allem Werte kleiner als 600 mm, insbesondere kleiner als 500 mm, 400 mm, 300 mm, 250 mm und insbesondere sogar Werte kleiner als 200 mm). Wie erwähnt, ist die exakte Mittellage für die Folienebene FE (also die Transportbahn) die ausdrücklich bevorzugte Lage, damit die von oben her wie von unten her von den Düsenkästen NB auf die Transportbahn einwirkenden Strömungskräfte ausgeglichen sind. Wenn von der exakten Mittellage abgewichen werden sollte, sollte die Abweichung möglichst gering sein, insbesondere weniger als 10%, wenn möglich weniger als 9%, 8%, 7%, 6%, 5%, 4%, 3%, 2% oder sogar weniger als 1 % ausmachen, und zwar bezogen auf den Abstand zwischen dem oberen und unteren Düsenkasten NB.

In einer bevorzugten Ausführungsform, wie in Figur 3 dargestellt ist, wird nur ein Linearmotorantrieb, nämlich mit untenliegenden Primärteilen 502, 502a und unten an dem Transportteil 7 ausgebildeten Permanentmagneten 503a verwendet, so dass hierdurch Vorschub- und Anziehungskräfte zusätzlich zu den Gewichtskräften an dem Transportteil 7 an dem Kluppenteil 6 ansetzen.

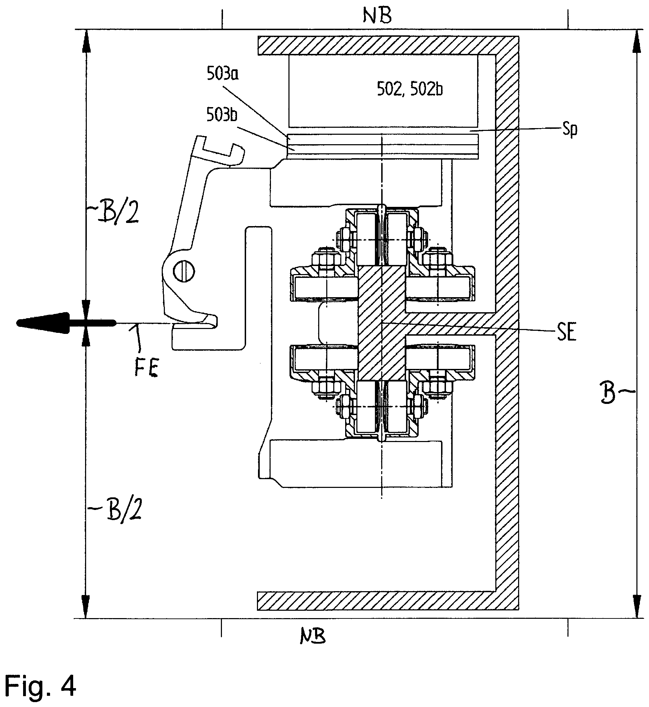

Anhand von Figur 4 ist nur grundsätzlich gezeigt, dass im Rahmen der Erfindung der nur asymmetrisch vorgesehene Antrieb auch obenliegend ausgebildet sein könnte, also mit obenliegendem Primärteil 502, 502b, ohne dass ein untenliegender Linearmotorantrieb zusätzlich vorgesehen wäre.

Die geschilderten Maßnahmen sind allerdings noch nicht ausreichend, um einen möglichst schonenden und schwingungsarmen Antrieb zu realisieren.

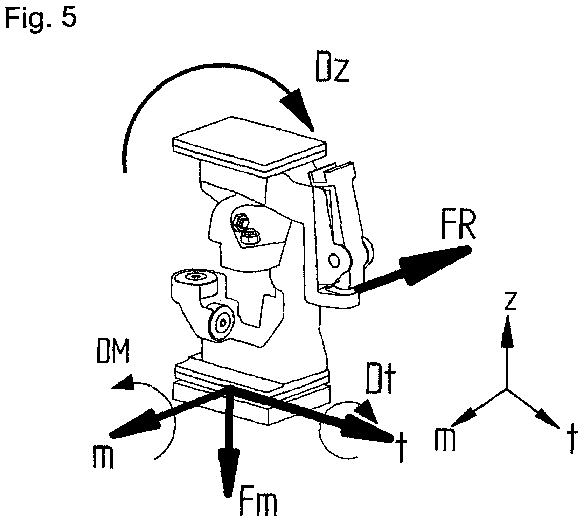

Um die im Rahmen der Erfindung zusätzlich vorgesehenen Maßnahmen besser einordnen zu können, soll nachfolgend anhand von Figur 5 zunächst erläutert werden, welche Kräfte an einem Transportteil und damit an einem Kluppenteil während einer Umlaufbewegung auf der Führungsbahn entstehen können.

Bei einem Umlauf der Transporteinheit auf der Führungsbahn sind wechselnde Betriebszustände zu unterscheiden, welche beim Verstrecken einer Transportbahn und insbesondere eines Kunststofffolienfilms dazu führen, dass sich partiell und temporär die Kraftrichtung, die an dem Transportteil angreift, auch umkehren kann. So muss zum Verstrecken eines Films am Beginn der Reckzone R eine Kraft entgegen der Bewegungsrichtung aufgebracht werden, während am Ende der Reckzone eine Kraft in Bewegungsrichtung aufgebracht werden muss. Dies führt bei unsymmetrischem Aufbau prinzipiell zu Drehmomenten, zu Kippkräften und zu Kippmomenten zusätzlich zu den Kräften und Momenten, die an den Transportteilen und Kluppen selbst bei einem symmetrischen Linearmotorantrieb angreifen, wenn also oben und untenliegend jeweils ein Linearmotor mit gleich großer Leistung vorgesehen ist. Zudem wirken zusätzlich auch eine resultierende Reckkraft FR durch die von der Anlage fortbewegte und zu reckende Transportbahn, vorzugsweise in Form eines Kunststofffolienfilms, sowie die Gewichtskraft FG, die Motorkraft FM und zusätzlichen Fliehund Zentrifugalkräften auf die Transporteinheit KT ein.

Anhand von Figur 5 sind die auftretenden Kraft- und Drehmomentangriffe an einem Transportteil schematisch dargestellt. Die Koordinate m beschreibt dabei den Weg entlang der Führungsschiene, wobei t eine dazu senkrechte Richtung darstellt. z steht senkrecht auf der von dem Vektor m und dem Vektor t aufgespannten Ebene. Dieses Koordinatensystem ist allerdings nicht mit der Maschinenrichtung MD oder der transversen Orientierung TD zu verwechseln, also der transversen Orientierung senkrecht zur Transportrichtung der Transportbahn, insbesondere in Form des Kunststofffilms, der gereckt werden soll. In Abhängigkeit beispielsweise der Reckkräfte FR bilden sich dann aus den resultierenden Kraftrichtungen entsprechende Drehmomente Dz, Dt und Dm. aus.

Um einen möglichst ruhigen und schwingungsarmen Lauf der Transporteinheit mit den zugehörigen Kluppenteilen zu ermöglichen, ist vorgesehen, dass der Linearmotorantrieb bezogen auf die horizontalen Laufflächen 15a, 15b symmetrisch ausgebildet ist, also hier zu einer symmetrischen Belastung der Tragrolle 505a (und 505b) führt.

Wie anhand von Figuren 2, 3 und 4 zu ersehen ist, ist unabhängig davon, ob nur ein untenliegender Linearmotor oder nur ein obenliegender Linearmotor, oder ob ein Antrieb mit unten und obenliegendem Linearmotor vorgesehen ist (wobei die beiden Linearmotorantriebe dann allerdings mit unterschiedlich großer Leistung ausgestattet sind), der jeweilige Linearmotorantrieb (mit den zugehörigen Primärteilen in Form von Magnetspulen und den an den Transportteilen ausgebildeten und mit diesen mitverfahrbaren Sekundärteilen in Form der dort vorgesehenen Magneten) symmetrisch zu der mittig durch die Führungsschienen verlaufenden Symmetrieebene SE angeordnet. Mit anderen Worten soll der jeweilige Mittelpunkt oder Schwerpunkt SP des zugehörigen Primärund/oder Sekundärteils nicht mehr als 20%, insbesondere weniger als 15%, 10% oder insbesondere weniger als 5%, 4%, 3%, 2% oder sogarweniger als 1% bezogen auf die gesamte Motorbreite MB bzw. MB' des Sekundärteils 503 von der mittig durch die Führungsschiene verlaufenden vertikalen Symmetrieebene SE abweichen (Figur 3). (SP kann beispielsweise einen Wert von 32 mm und MB einen Wert von 180 mm aufweisen, obgleich auch diese Werte in beachtlichem Rahmen variieren können).

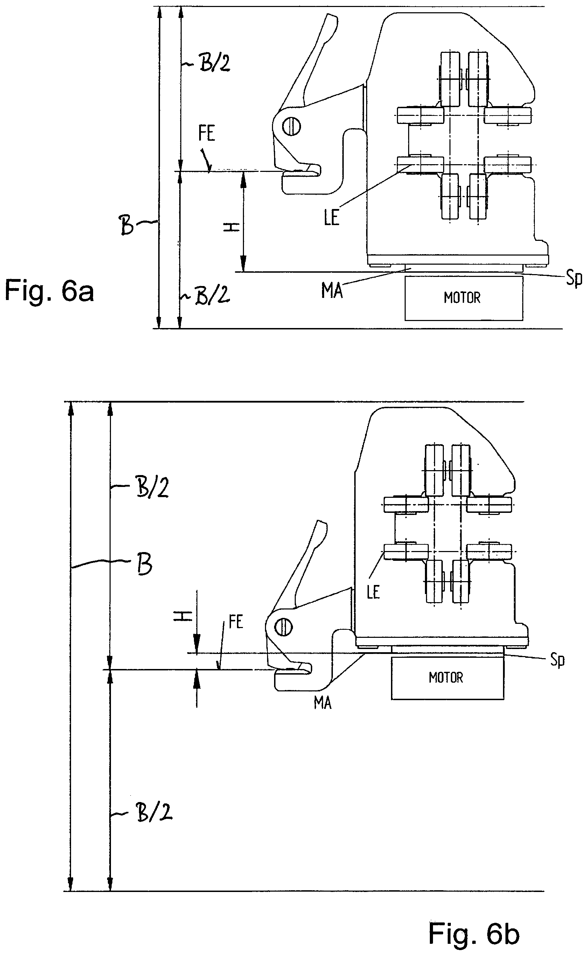

Nachfolgend wird auf die Figuren 6a und 6b Bezug genommen, um zu erläutern, dass im Rahmen der Erfindung vorgesehen ist, dass die Ebene der zu bewegenden Materialbahn, im vorliegenden Fall einer Reckanlage und insbesondere einer Simultan-Reckanlage in Form einer Folienebene FE, in der die Reckkraft wirkt, in einem bestimmten Abstand H zur Motorangriffsseite MA, also der Sekundärunterseite, liegen soll.

Dabei ist bei dem Ausführungsbeispiel gemäß Figur 6a die Film-Ebene FE oberhalb des untenliegenden Linearmotorantriebes vorgesehen. Bei dem Ausführungsbeispiel gemäß Figur 6b ist ein dazu gegenteiliges Extrem gezeigt, bei dem die Film- oder Folien-Ebene FE unterhalb der Motorangriffsseite MA des untenliegenden Linearmotorantriebs liegt.

Wie sich insbesondere aus den Figuren 3 und 6a ergibt, sollte der in Rede stehende Abstand H nicht größer als die Magnetlänge L sein, wobei im gezeigten Ausführungsbeispiel diese Magnetlänge L einen Wert von 125 mm aufweisen kann. (Dieser Wert kann ebenfalls wieder in beachtlichem Rahmen variieren). Die maximale Magnetlänge L kann dabei Werte aufweisen, die nicht größer sein sollen als beispielsweise 160 mm, insbesondere nicht größer sein als 150 mm, 140 mm, 130 mm, 120 mm oder 100 mm. Andererseits soll die magnetische Länge aber auch nicht kleiner als 40 mm sein, insbesondere nicht kleiner als 50 mm, 60 mm, 70 mm, 80 mm, 90 mm oder 100 mm.

Dabei wird ferner bezüglich des erwähnten Abstandes H angemerkt, dass positive Werte für H bedeuten, dass die Film-Ebene FE, wie in Figur 6a gezeigt, oberhalb der Motor-Angriffsebene MA (des untenliegenden Linearmotors) zu liegen kommt. Bevorzugt sollten diese Werte für H in einem Bereich von 40 mm bis 150 mm liegen. Mit anderen Worten sollte H einen Wert aufweisen, der nicht größer ist als insbesondere 140 mm, 130 mm, 120 mm, 110 mm oder 100 mm. Andererseits sollte der Wert für H auch nicht kleiner sein als insbesondere 50 mm, 60 mm, 70 mm, 80 mm oder 90 mm. Aus Figur 6b ist dabei ferner zu ersehen, dass die Werte für H aber auch negative Beträge annehmen können, wobei die vorstehend genannten negativen Vorzeichen bedeuten, dass der entsprechende Wert unterhalb der Motor-Angriffsebene MA liegt, wie dies in Figur 6b gezeigt ist.

Entsprechendes gilt grundsätzlich auch dann, wenn der Linearmotorantrieb nur obenliegend vorgesehen ist.

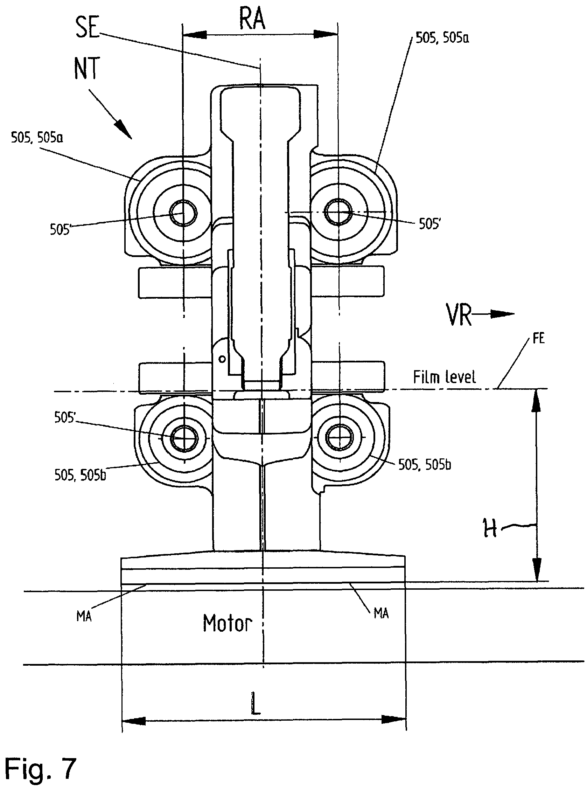

Die Kluppen-Transporteinheit KT und der Linearmotorantrieb sollen aber noch weitere Bedingungen erfüllen, was anhand von Figur 7 erläutert wird.

Anhand von Figur 7 ist eine entsprechende Kluppen-Transporteinheit KT in Seitenansicht wiedergegeben, also quer zur Vorschub-Richtung VR. Zu sehen sind die auf der oberen Lauffläche 15a abrollenden Laufrollen 505a, wie die auf der nach unten weisenden Lauffläche 15b abrollenden und somit gegenüberliegenden Laufrollen 505b. Diese sind in Vorschubrichtung versetzt zueinander liegend positioniert.

Ferner zu ersehen ist die Länge L des Sekundärteils 503.

Zudem soll anhand von Figur 7 auch verdeutlicht werden, dass das Sekundärteil 503 mit dem Permanentmagnet 503a (mit oder ohne Käfig 503b) eine bestimmte Magnetlänge L aufweist, die in einem bestimmten Verhältnis zum vorstehend erwähnten Abstand H zwischen der Film-Ebene FE und der MotorAngriffsseite MA stehen soll. Dieses Verhältnis soll die nachfolgende Bedingung erfüllen:

$$H / L \leq 1.0$$

Dabei wird der lediglich bei Realisierung eines untenliegenden Linearmotorantriebes insoweit einseitig vorgesehene Permanentmagnet 503a so angeordnet, dass das Umsetzen der Kraftrichtung zu keinen unerlaubten Schwingungen führt. Dies gilt in der Regel dann, wenn die Bedingung H/L $\leq$ 1 erfüllt wird. Schließlich ist anhand von Figur 7 auch gezeigt, dass zur Erzielung einer optimalen Lagerung unter Vermeidung von Schwingungen letztlich die Führungslänge RA zwischen den dort anhand von Figur 6 gezeigten Rollenlagern bezüglich der oberen Laufrollen 505, 505a bzw. zwischen den vor- und nachlaufenden Rollenlagern der unteren Laufrollen 505, 505b die nachfolgende Bedingung erfüllen soll

$$RA \leq L$$

Ferner ist anhand von Figur 7 eine Kluppen-Transporteinheit KT mit zugehörigem Kluppenteil 6 und Transportteil 7 dargestellt, und zwar in Seitenansicht quer zur Vorschubbewegung VR. Daraus ist zu ersehen, dass an dem Transportteil in Vorschub-Richtung VR Laufrollen oder Laufrollenpaare zu liegen kommen, deren Achsabstand RA zwischen den Laufrollenachsen 505' nicht kleiner als 40 mm und in der Regel nicht größer als 150 mm gewählt sein soll. Werte über 50 mm, 60 mm, 70 mm, 80 mm, 90 mm oder 100 mm und Werte unterhalb von 140 mm, 130 mm, 120 mm, 110 mm oder 100 mm sind in vielen Fällen günstig und ausreichend.

Dies gilt insbesondere für die das Gewicht tragenden obenliegenden Laufrollen 505a, die das Gewicht und die zusätzlichen über den untenliegenden Linearmotor erzeugten Kräfte aufnehmen und abstützen müssen, wobei eine Ausführungsform mit untenliegendem Linearmotor besonders bevorzugt ist (im Falle einer Verwendung von oben und untenliegenden Linearmotoren wird ein Linearmotorantrieb bevorzugt, bei dem der untenliegende Linearmotor, d.h. die untenliegenden Primärteile wie erläutert größere Kräfte und Anzugskräfte einleiten als der obenliegende Linearmotor).

Sofern bei dem erläuterten Ausführungsbeispiel anhand von Figur 7 anstelle der Rollen bzw. Rollenpaare Gleitelemente oder Gleitelementpaare verwendet werden, wird bei der entsprechenden Dimensionierung der Abstände und insbesondere des Abstandes RA jeweils auf den Abstand zwischen den Zentren (Mittelpunkten) zweier in Laufrichtung benachbarter Gleitelemente Bezug genommen.

Aus den vorstehend erläuterten Ausführungen ergibt sich vor allem, dass immer dann, wenn das Verhältnis zwischen

$$H / L \leq 1.0$$

und gleichzeitig

$$RA \leq L$$

ist, die vom Linearmotorantrieb erzeugten Anziehungskräfte besonders stabilisierend wirken und zu einem sehr vibrationsfreien Lauf vor allem auch im Rücklauf der Reckanlage beitragen. Dies gilt unabhängig davon, ob die Film-Ebene FE unter- oder oberhalb des Linearmotors vorgesehen ist, also ob umgekehrt der Linearmotor oberhalb oder unterhalb der Film-Ebene vorgesehen ist.

Allerdings sind auch Einsatzfälle möglich, bei denen die Bedingungen derart sein sollen, dass entweder das Verhältnis

$$H / L \leq 1.0$$

ist oder die nachfolgende Bedingung

$$RA \leq L$$

erfüllt ist.

Bei Werkzeugmaschinen mit Linearmotorantrieb ist die Führungslänge RA sehr groß, ebenso die Länge des Stators H und der Abstand, d.h. die Führungslänge RA.

Gleiches gilt bei der Kollision zwischen Kluppen sowie beim Öffnen und Schließen der Messerklappe, da in diesen Fällen eine zusätzliche Kraft aufgebraucht wird, die der Bewegungsrichtung entgegenwirkt.

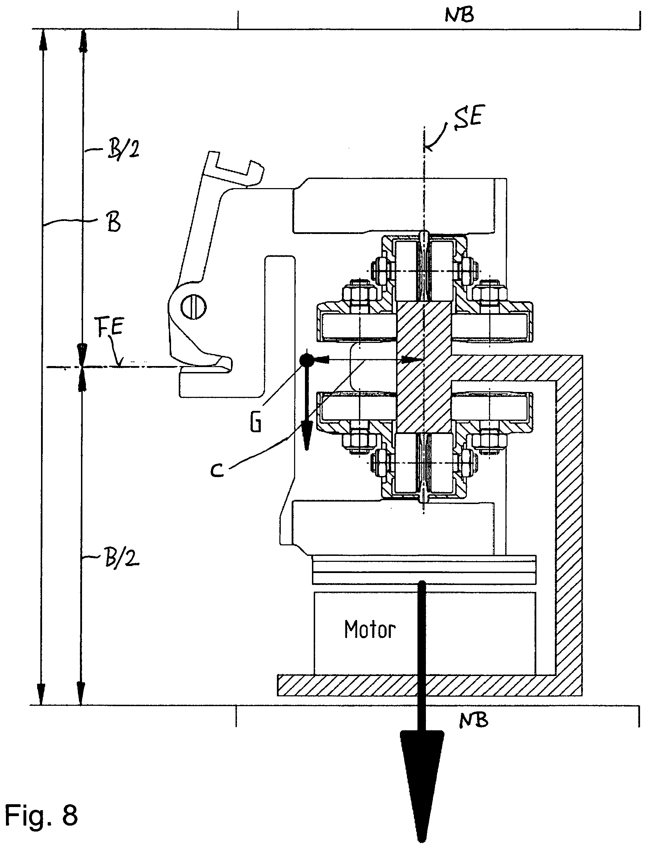

Nachfolgend wird auf Figur 8 Bezug genommen, anhand derer gezeigt wird, dass der Schwerpunkt G einer Kluppen-Transporteinheit KT mit dem Kluppenteil 6, dem Transportteil 7 und der das Kluppenteil 6 und das Transportteil 7 verbindenden Brücke 8 einen maximalen horizontalen Seitenabstand c von der die Führungsschiene 15 mittig durchsetzenden und vertikal verlaufenden Führungsschienenebene SE nicht überschreiten soll.

Wird nämlich dieser Abstand c größer als beispielsweise 40 mm, können Kippeffekte zunehmen, was zu Instabilitäten führen kann. Bevorzugt soll der Schwerpunkt G der jeweiligen Kluppen-Transporteinheit KT von der die Führungsschiene durchsetzenden Führungsschienenebene SE um weniger als 40 mm, insbesondere weniger als 35 mm, 30 mm, 25 mm, 20 mm, 15 mm, 10 mm, 5 mm, entfernt sein. Mit anderen Worten sind die Bedingungen umso besser, je näher der Schwerpunkt zur Führungsschienenebene SE liegt.

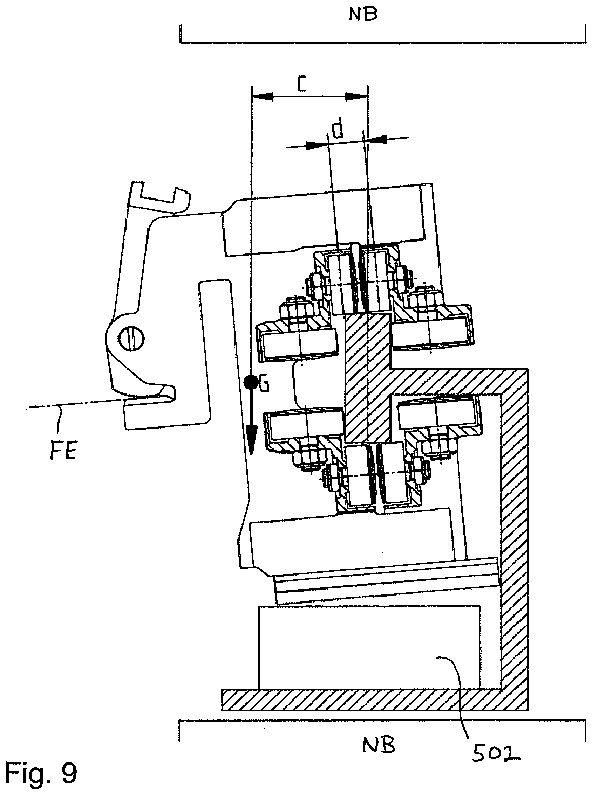

Anhand von Figur 9 ist in Weiterbildung zu Figur 8 gezeigt, dass auch bei entsprechenden Toleranzen oder Toleranzfehlern die Gefahr eines Verkippens der Kluppen-Transporteinheit KT bezogen auf die Führungs- und/oder Tragschiene 15 bestehen kann. Von daher soll der Abstand d zwischen den senkrecht zu den Drehachsen stehenden Mittenebenen des oberen Laufrollenpaares 505, 505a in einem vorgegebenen Verhältnis zum Abstand c zwischen dem Schwerpunkt G und der die Führungs- und/oder Tragschiene 15 mittig durchsetzten Führungsschienenebene SE stehen. Der erwähnte Abstand d soll dabei in dem nachfolgenden Verhältnis zum Abstand c des Schwerpunktes G liegen, damit Kippmomente in einem akzeptablen Bereich liegen, nämlich

$$c \leq 1,5 \ d$$

Insbesondere sind Werte bevorzugt, gemäß nachfolgenden Formeln

$$c \leq 1,4 \ d$$

oder

$$c \leq 1,3 \ d$$

oder

$$c \leq 1,2 \ d$$

oder

$$c \leq 1,1 \ d$$

oder

$$c \leq 1,0 \ d$$

Die Werte von d hängen dabei letztlich auch von der Dicke der Führungsschiene 15 mit ab, d.h. von der Breite der oberen Lauf- oder Gleichfläche 15a. Diese Werte für d können und sollen üblicherweise kleiner als 40 mm, insbesondere kleiner als 37,5 mm, 35 mm, 32,5 mm, 30 mm, 27,5 mm, 25 mm, 22,5 mm oder kleiner als 20 mm sein. Andererseits werden die Werte für das Maß d üblicherweise zumindest einen Wert von 12 mm aufweisen. Möglich ist auch, dass die Werte für d größer als 15 mm, 17,5 mm, 20 mm, 22,5 mm oder 20 mm sind.

Durch die vorstehend genannten Maße sind letztlich auch die Maße für den Wert c festgelegt. Der Wert für c kann im optimalen Falle 0 betragen, wenn nicht der Schwerpunkt in der die Führungsschiene 15 mittig durchsetzenden Führungsschienenebene SE liegt. c sollte dabei Werte aufweisen, die nicht über 50 mm liegen, also insbesondere, wenn möglich, ≤ 45 mm, insbesondere ≤ 40 mm, 35 mm, 30 mm, 25 mm, 20 mm, 15 mm, 10 mm und insbesondere 5 mm sein.

Schließlich kann auch noch ein weiterer Beitrag zur Verbesserung im Sinne der Erfindung dadurch gewährleistet werden, dass die Anordnung der unteren Laufrollen 505, 505b in einer optimalen Höhe liegen.

Es hat sich als günstig erwiesen, wenn die Folienhöhe, d.h. die Ebene in der die Transportbahn insbesondere in Form eines Kunststofffilms in der Reckanlage eingespannt gehalten wird, also die Folien-Ebene FE in Höhe der unteren Lauffläche 15b der Führungs- und/oder Tragschiene 15 oder tiefer zu liegen kommt.

Da zum Teil insbesondere bei untenliegendem einzigen Linearmotorantrieb gegebenenfalls auf diese Gegenrollen 505b verzichtet werden kann (da sowohl die Gewichtskräfte als auch die vom Linearmotorantrieb eingeleiteten Anziehungskräfte sich voll über die oberen Laufrollen 505, 505a abstützen), kann allgemein gesagt werden, dass die Materialbahn-Ebene FE in einer Höhe liegen sollte, in der die zutiefst liegenden und um eine Vertikalachse drehenden Rollen 505c und/oder 505d an der Führungs- und/oder Tragschiene 15 abrollen oder entsprechende Gleitelemente gleitend geführt sind. Diese Lage und/oder Ebene wird als Laufrollen-Ebene LE bezeichnet. Dies ist in Figur 6a eingezeichnet.

Abschließend wird noch auf zwei weitere Ausführungsbeispiele Bezug genommen, anhand derer grundsätzlich gezeigt werden soll, dass die erfindungsgemäßen Vorteile und bevorzugten weiteren Ausbildungsformen auch anhand einer völlig unterschiedlich gebildeten Führungsschiene 15 realisiert werden können.

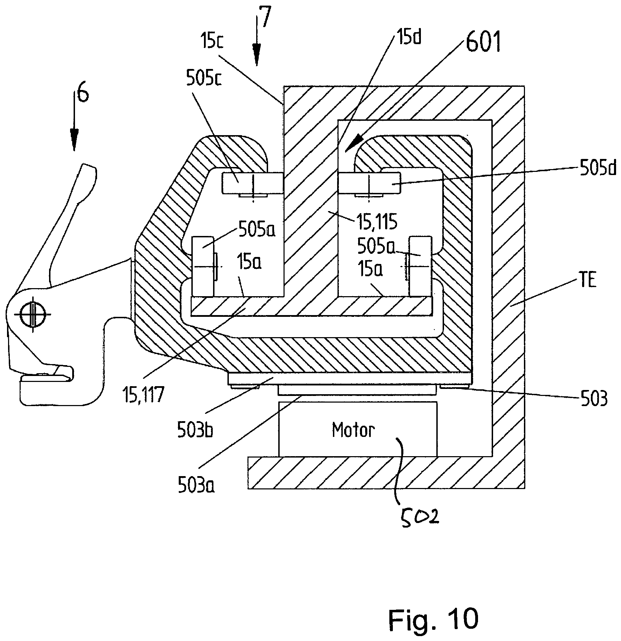

Bei der Variante gemäß Figur 10 ist die Führungsschiene 15, 15a nach Art eines auf dem Kopf stehenden T-Profils gebildet, und zwar mit einem vertikalen Führungsschienenabschnitt 115 und einem sich unten anschließenden horizontalen Führungsschienenabschnitt 117. Auf dem untenliegenden horizontalen Führungsschienenabschnitt 117, der jeweils von dem mittigen, vertikal verlaufenden Führungsschienenabschnitt 115 in beiden Seitenrichtungen vorsteht, können die oberen in Vorschubrichtung versetzt liegenden Rollen oder Rollenpaare 505, 505a abrollen und darüber die gesamte Last der KluppenTransporteinheit KT sowie die Anziehungskräfte, die über den untenliegenden Linearmotorantrieb aufgebracht werden, aufnehmen. Anstelle von Laufrollen können grundsätzlich auch alternativ oder ergänzend Gleitelemente in diesem Bereich angeordnet sein.

Die entsprechenden, anhand der anderen Ausführungsbeispiele um eine Vertikalachse drehenden Laufrollen und Laufrollenpaare 505c, 505d laufen an den beiden gegenüberliegenden vertikal ausgerichteten Laufflächen 15c bzw. 15d des vertikalen Führungsschienenabschnitts 115 ab.

Das eigentliche Transportteil 7 ist nach Art eines liegenden C-Profils mit nach oben weisendem Öffnungsbereich ausgebildet, wobei durch den nach oben weisenden Öffnungsbereich 601 der vertikale Führungsschienenabschnitt 115 in den Innenraumbereich des nach Art eines liegenden C gebildeten Transportteils 7 eingreift. Auf der Unterseite des so gebildeten Transportteils 7 ist dann das in den anderen Ausführungsbeispielen ebenfalls erwähnte Sekundärteil 503 mit den Permanentmagneten 503a und dem Käfig 503b ausgebildet bzw. vorgesehen. Im geringen Abstand dazu ist unterhalb der untenliegende Linearmotorantrieb mit dem zugehörigen Primärteil 502 angeordnet, der ebenfalls durch die gemeinsame Trag-Einrichtung TE gehalten wird, die mit der Führungsschiene fest verbunden ist.

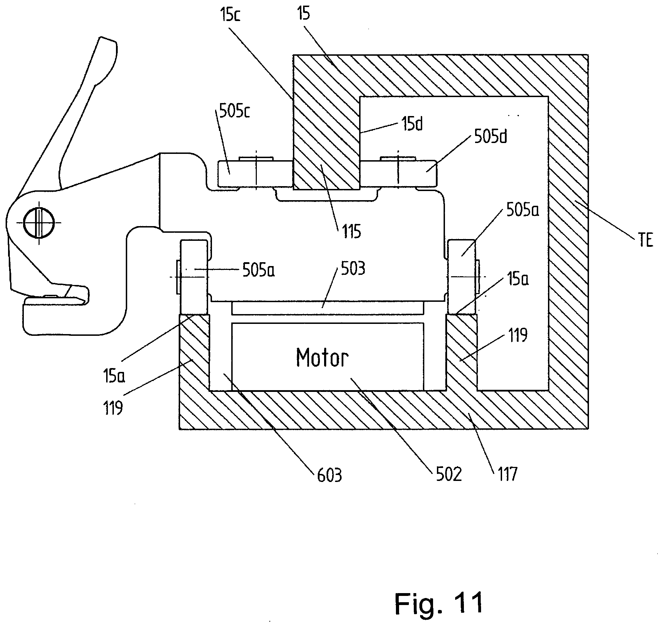

Die Variante gemäß Figur 11 ist ähnlich zu dem Ausführungsbeispiel nach Figur 10 gebildet. Unterschiedlich ist hierzu, dass die Führungsschiene 15 mit ihrem obenliegenden vertikalen Führungsschienenabschnitt 115 verhältnismäßig kurz ausgebildet ist und dieser Führungsschienenabschnitt als Teil der gesamten Trag-Einrichtung TE mit einem untenliegenden Horizontalabschnitt 117 in Verbindung steht, auf welchem die in horizontaler Drehachse drehenden Laufrollen und Laufrollenpaare 505, 505a abrollen. Dazu sind an dem unteren horizontalen Führungsschienenabschnitt 117 im entsprechenden Abstand der Laufrollen 505, 505a Vertikalstege 119 zusätzlich vorgesehen, um die Lauffläche 15a höher liegend auszubilden. Dadurch ergibt sich ein, zwischen den beiden mit Seitenversatz quer zur Längsrichtung der Führungsschiene angeordneten Vertikalstegen 119, Aufnahmeraum 603, in welchem der Linearmotorantrieb mit seinem Primärteil 502 untergebracht werden kann.

Bei den Ausführungsbeispielen gemäß Figuren 10 und 11 ist gemeinsam, dass hierdurch die horizontalen Laufflächen 15a zur Aufnahme des Gewichts der Kluppen-Transporteinheit KT und zur Abstützung der über den Linearmotorantrieb eingeleiteten Vorschub- bzw. Antriebskräfte mit großem Seitenabstand aufgenommen werden können, wodurch möglicherweise entstehende Kippkräfte sehr viel besser aufgenommen und verhindert werden können, die auf die Kluppen-Transporteinheit KT ansonsten vor allem bei Toleranzfehlern einwirken könnten, wie dies beispielsweise anhand von Figur 8 erläutert worden ist.

Die insbesondere angegebene Formel

$$c \leq 1{,}5\ d$$

lässt sich also gemäß dieser Ausführungsformen nach Figuren 10 und 11 noch bei weitem leichter einhalten bzw. umsetzen. Bei diesem Ausführungsbeispiel ist der Seitenabstand c des Schwerpunkts G zur Führungsschienenebene SE sogar kleiner oder sehr viel kleiner als der Abstand d zwischen den beiden links und rechts der Führungsschiene 115 des vertikalen Führungsschienenabschnittes 115 positionierten Laufrollen 15c, 15d oder entsprechend den dort vorgesehenen Gleitelementen.

**Patentansprüche**

1. Linearmotorgetriebene Transportanlage, insbesondere Reck- und SimultanReckanlage, mit folgenden Merkmalen:

   - mit einer Führungs- und/oder Transportschiene (15; 115, 117), längs der eine Kluppen-Transporteinheit (KT) mit einem Kluppenteil (6) und einem Transportteil (7) mittels eines Linearmotorantriebs längs verfahrbar ist,
   - der Linearmotorantrieb umfasst mit dem Transportteil (7) verfahrbare und daran fest angebrachte Sekundärteile (503), vorzugsweise in Form von Permanentmagneten (503a) und im geringen Abstandsspalt (Sp) dazu feststehende Primärteile (502) zur Erzeugung von elektromagnetischen Feldern, wobei die Primärteile (502) an einer Motor-Angriffsseite (MA) der Sekundärteile (503) unter Fortbewegung der Sekundärteile (503) ansetzen,
   - das Kluppenteil (6) umfasst eine Einspanneinrichtung zur Fixierung eines Randes einer Materialbahn (F), wodurch eine Materialbahn-Ebene (FE) definiert ist,

   **gekennzeichnet durch** die folgenden weiteren Merkmale:

   - die Transportanlage umfasst entweder

     a) lediglich einen unterhalb des Transportteils (7) vorgesehenen Linearmotorantrieb, oder

b) lediglich einen oberhalb des Transportteils (7) vorgesehenen Linearmotorantrieb, oder

c) sowohl einen unterhalb als auch oberhalb des Transportteils (7) angeordneten Linearmotorantrieb, wobei der obere Linearmotorantrieb und/oder die zugehörige Steuerung so ausgebildet ist, dass der obere Linearmotorantrieb lediglich mit einer maximalen Leistung von 75% bezüglich der maximalen Leistung des unteren Linearmotorantriebs betreibbar ist,

- die Transportbahn (F) ist an dem Kluppenteil (6) fixierbar, wodurch eine Transportbahn-Ebene (FE) definiert ist, wobei diese Folien-Ebene (FE) in einem Höhenabstand (H) gegenüber der Motor-Angriffsseite (MA) des alleinigen Linearmotorantriebes oder des stärkeren Linearmotorantriebes im Falle von zwei Linearmotorantrieben angeordnet ist, und dieser Höhenabstand (H) kleiner oder gleich der Länge (L) der Sekundärteile (503) an den Transportteilen (7) ist.

2. Transportanlage nach Anspruch 1, **dadurch gekennzeichnet, dass** die die Traglast der Kluppen-Transporteinheit (KT) abstützenden und auf der oberen Lauffläche (15a) der Führungsschiene (15; 115, 117) abrollenden Laufrollen (505a) und/oder die auf der oberen Lauffläche (15a) der Führungs- und/oder Tragschiene (15; 115, 117) gleitend verschiebbar gelagerten Gleitelemente so in Vorschub-Richtung (VR) der Kluppen-Transporteinheit (KT) positioniert sind, dass der Abstand (RA) zwischen den Rollen (505a) und/oder der Abstand (RA) zwischen den Mittel- oder Schwerpunkten (SP) der Gleitelemente in VorschubRichtung (VR) einen Wert aufweist, der kleiner oder gleich der Länge (L) der Sekundärteile (503) ist.

3. Transportanlage nach Anspruch 1 oder 2, **dadurch gekennzeichnet, dass** die Länge (L) der Sekundärteile (503) $\leq$ 150 mm, insbesondere 140 mm, 130 mm, 120 mm, 110 mm und insbesondere 100 mm und/oder dass die Länge (L) das Sekundärteil (503) $\geq$ 40 mm, insbesondere $\geq$ 50 mm, 60 mm, 70 mm, 80 mm, 90 mm oder $\geq$ 100 mm ist.

4. Transportanlage nach Anspruch 1, 2 oder 3, **dadurch gekennzeichnet, dass** der Schwerpunkt (G) einer Kluppen-Transporteinheit (KT) einen Abstand (c) zu einer die Führungs- und/oder Tragschiene (15; 115, 117) mittig und vertikal durchsetzenden Führungsschienen-Ebene (SE) aufweist, der $\leq$ 50 mm, insbesondere $\leq$ 45 mm, 40 mm, 35 mm, 30 mm, 25 mm, 20 mm, 15 mm, 10 mm und insbesondere $\leq$ 5 mm ist.

5. Transportanlage nach einem der Ansprüche 1 bis 4, **dadurch gekennzeichnet, dass** zumindest zwei auf der oberen Lauffläche (15a) der Führungs- und/oder Tragschiene (15; 115, 117) mit Seitenversatz zur Vorschub-Richtung (VR) angeordnete Laufräder (505a) und/oder vorgesehene Gleitteile (505'a) so positioniert sind, dass der Seitenabstand (d) zwischen den Mittelpunkten dieser Laufrollen (505a) und/oder zwischen den Mittelpunkten der Gleitteile (505'a) bezüglich des horizontalen Seitenabstandes (c) des Schwerpunktes (G) einer Kluppen-Transporteinheit (KT) zur Führungsschienen-Ebene (SE) die folgende Bedingung erfüllt:

$$c \leq 1{,}5\ d$$

oder

$$c \leq 1{,}4\ d$$

oder

$$c \leq 1{,}3\ d$$

oder

$$c \leq 1{,}2\ d$$

oder

$$c \leq 1{,}1\ d$$

oder

$$c \leq 1{,}0\ d,$$

wobei d der Abstand zwischen Mittenebenen ist, die senkrecht zu den Drehachsen eines oberen Laufrollen-Paares (505, 505a) oder in Vertikalausrichtung mittig durch ein entsprechendes Gleitelementen-Paar verlaufen.

6. Transportanlage nach Anspruch 5, **dadurch gekennzeichnet, dass** der Abstand (d) $\leq$ als 40 mm, insbesondere $\leq$ 37,5 mm, 35 mm, 32,5 mm, 30 mm, 27,5 mm, 25 mm, 22,5 mm oder $\leq$ 20 mm ist und/oder dass der Abstand (d) $\geq$ 12 mm, insbesondere $\geq$ 15 mm, 17,5 mm, 20 mm, 22,5 mm oder 25 mm ist

7. Transportanlage nach einem der Ansprüche 1 bis 6, **dadurch gekennzeichnet, dass** die auf der oberen Lauffläche (15a) der Führungs- und/oder Tragschiene (15; 115, 117) in Vorschub-Richtung (VR) versetzt vorgesehenen Laufrollen (505a) und/oder in Vorschub-Richtung (VR) versetzt angeordneten Gleitteile (505'a) bezüglich deren Mittelpunkte einen Abstand (RA) aufweisen, der ≤ 150 mm, insbesondere ≤ 140 mm, 130 mm, 120 mm, 110 mm oder 100 mm ist und/oder ≥ 40 mm, insbesondere ≥ 50 mm, 60 mm, 70 mm, 80 mm, 90 mm oder ≥ 100 mm ist.

8. Transportanlage nach einem der Ansprüche 1 bis 7, **dadurch gekennzeichnet, dass** der Abstand (H) zwischen der Transport-Ebene (FE) und der Motorangriffsseite (MA) ≤ 150 mm, vorzugsweise ≤ 140 mm, 130 mm, 120 mm, 110 mm, 100 mm und/oder ≥ 40 mm, ≥ 50 mm, 60 mm, 70 mm, 80 mm, 90 mm oder ≥ 100 mm ist.

9. Transportanlage nach einem der Ansprüche 1 bis 8, **dadurch gekennzeichnet, dass** der zumindest eine oder die zumindest beiden mit unterschiedlichen Leistungen ausgestatteten Linearmotorantriebe symmetrisch zur Führungsschienen-Ebene (SE) angeordnet sind und die Breite (MB, MB') des jeweiligen Primärteils (502) und/oder des zugehörigen, damit zusammenwirkenden Sekundärteils (503) so gewählt und bezüglich der Breitenerstreckung so angeordnet ist, dass die Mitte des Primärteils (502) und/oder die Mitte des Sekundärteils (503) um weniger als 15%, insbesondere um weniger als 10% oder um weniger als 8%, 6%, 5%, 4%, 3%, 2% oder sogar um weniger als 1% der gesamten Motor-Breite (MB) des Primärteils (502) oder der gesamten Motor-Breite (MB') des Sekundärteils (503) von der Führungsschienen-Ebene (SE) entfernt liegt.

10. Transportanlage nach einem der Ansprüche 1 bis 9, **dadurch gekennzeichnet, dass** im Falle eines bezüglich des Transportteils (7) unterhalb liegenden ersten Linearmotorantriebs und eines dazu oberhalb liegenden zweiten Linearmotorantriebs der obere Linearmotorantrieb eine maximale Leistung aufweist, die kleiner ist als 70%, insbesondere kleiner ist als 60%, 50%, 40%, 30% und insbesondere kleiner ist als 20% der Leistung des unteren Linearmotorantriebs.

11. Transportanlage nach einem der Ansprüche 1 bis 10, **dadurch gekennzeichnet, dass** oberhalb und unterhalb der Kluppen-Transporteinheit (KT) jeweils ein Düsenkasten (NB) angeordnet ist, und dass bei lediglich einem unterhalb oder lediglich oberhalb der Kluppen-Transporteinheit (KT) vorgesehenen Linearmotor-Antrieb der Kluppentisch (25e) zum Einklemmen einer Transportbahn (F) zwischen dem oberen und unteren Düsenkasten (NB) mittig angeordnet ist oder davon weniger als 10 %, insbesondere weniger als 9 %, 8 %, 7 %, 6 %, 5 %, 4 %, 3 %, 2 % oder weniger als 1 % bezogen auf den Gesamtabstand (B) zwischen dem oberen und dem unteren Düsenkasten (NB) abweichend angeordnet ist.

12. Transportanlage nach einem der Ansprüche 1 bis 11, **dadurch gekennzeichnet, dass** der Abstand zwischen einem oberen und einem unteren Düsenkasten (NB), zwischen dem die Kluppen-Transporteinheit (KT) mittels des lediglich unterhalb oder lediglich oberhalb der Kluppen-Transporteinheit (KT) vorgesehenen Linearmotor-Antriebes, in einem Abstand (B) zueinander angeordnet ist, der kleiner als 700 mm, insbesondere kleiner als 600 mm, 500 mm, 400 mm, 300 mm, 250 mm, 200 mm und insbesondere kleiner als 175 mm ist und vorzugsweise zwischen 150 mm und 700 mm liegt.

**Claims**

1. Linear motor-driven conveying system, in particular stretching and simultaneous stretching system, having the following features:

   - having a guide rail and/or conveying rail (15; 115, 117) along which a gripperconveying unit (KT) having a gripper part (6) and a conveying part (7) is displaceable lengthways by a linear motor drive,
   - the linear motor drive comprises secondary parts (503) which are displaceable with the conveying part (7), are attached fixedly thereto and are preferably in the form of permanent magnets (503a), and comprises fixed primary parts (502) in a small spacing gap (Sp) therefrom, for generating electromagnetic fields, the primary parts (502) acting on a motor engagement side (MA) of the secondary parts (503) while the secondary parts (503) continue to move,
   - the gripper part (6) comprises a clamping device for fixing an edge of a material web (F), thereby defining a material web plane (FE),

   **characterised by** the following further features:

   - the conveying system comprises either

      a) only one linear motor drive provided below the conveying part (7), or
      b) only one linear motor drive provided above the conveying part (7), or
      c) one linear motor drive arranged below and one arranged above the conveying part (7), the upper linear motor drive and/or the associated control means being configured such that the upper linear motor drive is operable

only at a maximum power of 75 % with respect to the maximum power of the lower linear motor drive,

- the conveyed web (F) can be fixed to the gripper part (6), thereby defining a conveyed web plane (FE), this film plane (FE) being arranged at a height distance (H) with respect to the motor engagement side (MA) of the single linear motor drive or of the more powerful linear motor drive in the case of two linear motor drives, and this height distance (H) being less than or equal to the length (L) of the secondary parts (503) on the conveying parts (7).

2. Conveying system according to claim 1, **characterised in that** the rollers (505a) supporting the load of the gripper-conveying unit (KT) and rolling on the upper running surface (15a) of the guide rail (15; 115, 117) and/or the sliding elements mounted such that they are slidingly displaceable on the upper running surface (15a) of the guide rail and/or support rail (15; 115, 117) are positioned in the feed direction (VR) of the gripper-conveying unit (KT) so that the distance (RA) between the rollers (505a) and/or the distance (RA) between the centres or centres of gravity (SP) of the sliding elements in the feed direction (VR) has a value which is less than or equal to the length (L) of the secondary parts (503).

3. Conveying system according to either claim 1 or claim 2, **characterised in that** the length (L) of the secondary parts (503) is less than or equal to 150 mm, in particular is less than or equal to 140 mm, 130 mm, 120 mm, 110 mm and in particular less than or equal to 100 mm, and/or **in that** the length (L) of the secondary part (503) is greater than or equal to 40 mm, in particular is greater than or equal to 50 mm, 60 mm, 70 mm, 80 mm, 90 mm or greater than or equal to 100 mm.

4. Conveying system according to claim 1, claim 2 or claim 3, **characterised in that** the centre of gravity (G) of a gripper-conveying unit (KT) has a distance (c) from a guide rail plane (SE) which passes centrally and vertically through the guide rail and/or support rail (15; 115, 117), which distance is less than or equal to 50 mm, in particular is less than or equal to 45 mm, 40 mm, 35 mm, 30 mm, 25 mm, 20 mm, 15 mm, 10 mm and in particular less than or equal to 5 mm.

5. Conveying system according to any of claims 1 to 4, **characterised in that** at least two running wheels (505a), arranged on the upper running surface (15a) of the guide rail and/or support rail (15; 115, 117) with a lateral offset to the feed direction (VR), and/or provided sliding parts (505'a) are positioned such that the lateral distance (d) between the centres of these rollers (505a) and/or between the centres of the sliding parts (505'a) with respect to the horizontal lateral distance (c) of the centre of gravity (G) of a gripper-conveying unit (KT) from the guide rail plane (SE) satisfies the following condition:

$$c \leq 1.5 \, d$$

or

$$c \leq 1.4 \, d$$

or

$$c \leq 1.3 \, d$$

or

$$c \leq 1.2 \, d$$

or

$$c \leq 1.1 \, d$$

or

$$c \leq 1.0 \, d,$$

where d is the distance between centre planes which extend vertically to the rotational axes of an upper pair of rollers (505, 505a) or extend centrally through a corresponding pair of sliding elements in a vertical orientation.

6. Conveying system according to claim 5, **characterised in that** the distance (d) is less than or equal to 40 mm, in particular less than or equal to 37.5 mm, 35 mm, 32.5 mm, 30 mm, 27.5 mm, 25 mm, 22.5 mm or less than or equal to 20 mm, and/or **in that** the distance (d) is greater than or equal to 12 mm, in particular greater than or equal to 15 mm, 17.5 mm, 20 mm, 22.5 mm or 25 mm.

7. Conveying system according to any of claims 1 to 6, **characterised in that** the rollers (505a) provided on the upper running surface (15a) of the guide rail and/or support rail (15; 115, 117), offset in the feed direction (VR) and/or sliding parts (505'a) arranged offset in the feed direction (VR) have with respect to the centres thereof a distance (RA) which is less than or equal to 150 mm, in particular less than or equal to 140 mm, 130 mm, 120 mm, 110 mm or 100 mm and/or is greater than or equal to 40 mm, in particular greater than or equal to 50 mm, 60 mm, 70 mm, 80 mm, 90 mm or greater than or equal to 100 mm.

8. Conveying system according to any of claims 1 to 7, **characterised in that** the distance (H) between the conveying plane (FE) and the motor engagement side (MA) is less than or equal to 150 mm, preferably less than or equal to 140 mm, 130 mm, 120 mm, 110 mm, 100 mm and/or is greater than or equal to 40 mm, 50 mm, 60 mm, 70 mm, 80 mm, 90 mm or greater than or equal to 100 mm.

9. Conveying system according to any of claims 1 to 8, **characterised in that** the at least one or the at least two linear motor drives of a different power are arranged symmetrically to the guide rail plane (SE) and the width (MB, MB') of the respective primary part (502) and/or of the associated secondary part (503) cooperating therewith is selected and arranged with respect to the width extent such that the centre of the primary part (502) and/or the centre of the secondary part (503) is at a distance of less than 15 %, in particular less than 10 % or less than 8 %, 6 %, 5 %, 4 %, 3 %, 2 % or even of less than 1 % of the entire motor width (MB) of the primary part (502) or of the entire motor width (MB') of the secondary part (503) from the guide rail plane (SE).

10. Conveying system according to any of claims 1 to 9, **characterised in that** when a first linear motor drive, positioned under the conveying part (7), and a second upper linear motor drive are provided, the upper linear motor drive has a maximum power which is less than 70 %, in particular less than 60 %, 50 %, 40 %, 30 % and in particular less than 20 % of the power of the lower linear motor drive.

11. Conveying system according to any of claims 1 to 10, **characterised in that** a respective nozzle box (NB) is arranged above and below the gripper-conveying unit (KT), and **in that** when only one linear motor drive is provided below or above the gripper-conveying unit (KT), the gripper table (25e) for clamping a conveyed web (F) between the upper and lower nozzle box (NB) is arranged centrally or arranged in a deviating manner therefrom by less than 10 %, in particular by less than 9 %, 8 %, 7 %, 6 %, 5 %, 4 %, 3 %, 2 % or by less than 1 % based on the total distance (B) between the upper and the lower nozzle box (NB).

12. Conveying system according to any of claims 1 to 11, **characterised in that** the distance between an upper and a lower nozzle box (NB), between which the gripperconveying unit (KT) is arranged at a distance (B) from the nozzle boxes by the linear motor drive provided only below or only above the gripper-conveying unit (KT), which distance is less than 700 mm, in particular less than 600 mm, 500 mm, 400 mm, 300 mm, 250 mm, 200 mm and in particular less than 175 mm and is preferably between 150 mm and 700 mm.

**Revendications**

1. Installation de transport entraînée par un moteur linéaire, en particulier installation d'étirage et d'étirage simultané, présentant les éléments suivants :

   - un rail de guidage et/ou de transport (15 ; 115, 117), le long duquel une unité de transport à pinces (KT) pourvue d'une partie à pinces (6) et d'une partie de transport (7) est déplaçable longitudinalement au moyen d'un entraînement à moteur linéaire,
   - l'entraînement à moteur linaire comprend des éléments secondaires (503) déplaçables avec la partie de transport (7) et montés fermement sur celle-ci, de préférence sous forme d'aimants permanents (503a), et des éléments primaires (502) stationnaires à faible espacement (Sp) de ceux-ci et destinés à générer des champs électromagnétiques, les éléments primaires (502) attaquant un côté d'attaque de moteur (MA) des éléments secondaires (503) en faisant déplacer les éléments secondaires (503),
   - la partie à pinces (6) comprend un dispositif de serrage pour fixer un bord d'une bande de matériau (F) en définissant un plan de bande de matériau (FE),

   **caractérisée par** les autres éléments suivants :

   - l'installation de transport comprend soit

      a) uniquement un entraînement à moteur linéaire prévu au-dessous de la partie de transport (7), soit
      b) uniquement un entraînement à moteur linéaire prévu au-dessus de la partie de transport (7), soit encore
      c) un entraînement à moteur linéaire prévu aussi bien au-dessous qu'au-dessus de la partie de transport (7), l'entraînement à moteur linéaire supérieur et/ou la commande associée étant réalisés de telle sorte que l'entraînement à moteur linéaire supérieur est susceptible de fonctionner uniquement à une puissance maximale de 75 % par rapport à la puissance maximale de l'entraînement à moteur linéaire inférieur,

   - la bande à transporter (F) est susceptible d'être fixée sur la partie à pinces (6) en définissant un plan de bande à transporter (FE), ce plan de feuille (FE) étant agencé à une distance en hauteur (H) par rapport au côté d'attaque de moteur (MA) du seul entraînement à moteur linéaire ou bien de l'entraînement à moteur linéaire plus fort en cas de deux entraînements à moteur linéaire, et cette distance en hauteur (H) est inférieure ou égale à la longueur (L) des éléments secondaires (503) sur les parties de transport (7).

2. Installation de transport selon la revendication 1, **caractérisée en ce que** les roulettes (505a) supportant la charge de l'unité de transport à pinces (KT) et roulant sur la surface de roulement supérieure (15a) du rail de guidage (15 ; 115, 117), et/ou les éléments coulissants montés en coulissement sur la surface de roulement supérieure (15a) du rail de guidage et/ou de support (15 ; 115, 117) sont positionné(e)s en direction d'avance (VR) de l'unité de transport à pinces (KT) de telle sorte que la distance (RA) entre les roulettes (505a) et/ou la distance (RA) entre les points centraux ou centres de gravité (SP) des éléments coulissants en direction d'avance (VR) présente(nt) une valeur inférieure ou égale à la longueur (L) des éléments secondaires (503).

3. Installation de transport selon la revendication 1 ou 2, **caractérisée en ce que** la longueur (L) des éléments secondaires (503) est ≤ 150 mm, en particulier ≤ 140 mm, 130 mm, 120 mm, 110 mm et particulièrement ≤ 100 mm, et/ou **en ce que** la longueur (L) des éléments secondaires (503) est ≥ 40 mm, en particulier ≥ 50 mm, 60 mm, 70 mm, 80 mm, 90 mm ou ≥ 100 mm.

4. Installation de transport selon la revendication 1, 2 ou 3, **caractérisée en ce que** le centre de gravité (G) d'une unité de transport à pinces (KT) présente une distance (c) vis-à-vis d'un plan de rail de guidage (SE) qui traverse verticalement au centre le rail de guidage et/ou de support (15 ; 115, 117) qui est ≤ 50 mm, en particulier ≤ 45 mm, 40 mm, 35 mm, 30 mm, 25 mm, 20 mm, 15 mm, 10 mm et en particulier ≤ 5 mm.

5. Installation de transport selon l'une des revendications 1 à 4, **caractérisée en ce qu'**au moins deux roulettes (505a) agencées sur la surface de roulement supérieure (15a) du rail de guidage et/ou de support (15 ; 115, 117) avec décalage latéral par rapport à la direction d'avance (VR) et/ou des éléments coulissants (505'a) prévus sur ladite surface de roulement sont positionné(e)s de telle sorte que la distance latérale (d) entre les centres de ces roulettes (505a) et/ou entre les centres des éléments coulissants (505'a) par rapport à la distance latérale horizontale (c) du centre de gravité (G) d'une unité de transport à pinces (KT) par rapport au plan (SE) du rail de guidage satisfait la condition suivante :

$$c \leq 1,5\ d$$

ou

$$c \leq 1,4\ d$$

ou

$$c \leq 1,3\ d$$

ou

$$c \leq 1,2\ d$$

ou

$$c \leq 1,1\ d$$

ou

$$c \leq 1,0\ d,$$

d étant la distance entre des plans médians qui s'étendent perpendiculairement aux axes de rotation d'une paire de roulettes supérieure (505, 505a) ou bien en orientation verticale au milieu à travers une paire d'éléments coulissants correspondante.

6. Installation de transport selon la revendication 5, **caractérisée en ce que** la distance (D) est ≤ 40 mm, en particulier ≤ 37,5 mm, 35 mm, 32,5 mm, 30 mm, 27,5 mm, 25 mm, 22,5 mm ou ≤ 20 mm et/ou la distance (d) est ≥ 12 mm, en particulier ≥ 15 mm, 17,5 mm, 20 mm, 22,5 mm ou 25 mm.

7. Installation de transport selon l'une des revendications 1 à 6, **caractérisée en ce que** les roulettes (505a) prévues en décalage en direction d'avance (VR) et/ou les éléments coulissants (505'a) agencés en décalage en direction d'avance (VR) sur la surface de roulement supérieure (15a) du rail de guidage et/ou de support (15; 115, 117) présentent une distance (RA) par rapport à leurs centres, qui est ≤ 150 mm, en particulier ≤ 140 mm, 130 mm, 120 mm, 110 mm ou 100 mm, et/ou ≥ 40 mm, en particulier ≤ 50 mm, 60 mm, 70 mm, 80 mm, 90 mm ou ≤ 100 mm.

8. Installation de transport selon l'une des revendications 1 à 7, **caractérisée en ce que** la distance (H) entre le plan de transport (FE) et le côté d'attaque de moteur (MA) est ≤ 150 mm, de préférence ≤ 140 mm, 130 mm, 120 mm, 110 mm, 100 mm, et/ou ≥ 40 mm, ≥ 50 mm, 60 mm, 70 mm, 80 mm, 90 mm ou ≥ 100 mm.

9. Installation de transport selon l'une des revendications 1 à 8, **caractérisée en ce que** ledit au moins un ou lesdits au moins deux entraînements à moteur linéaire présentant des puissances différentes sont agencés symétriquement par rapport au plan (SE) du rail de guidage, et la largeur (MB, MB') de l'élément primaire respectif (502) et/ou de l'élément secondaire (503) associé coopérant avec celui-ci est choisie de telle sorte et disposée par rapport à l'extension en largeur de telle sorte que le centre de l'élément primaire (502) et/ou le centre de l'élément secondaire (503) est éloigné du plan (SE) du rail de guidage de moins de 15 %, en particulier de moins de 10 % ou de moins de 8 %, 6 %, 5 %, 4 %, 3 %, 2 % ou même de moins de 1 % de la largeur de moteur totale (MB) de l'élément primaire (502) ou de la largeur de moteur totale (MB') de l'élément secondaire (503).

10. Installation de transport selon l'une des revendications 1 à 9, **caractérisée en ce que** dans le cas d'un premier entraînement à moteur linéaire situé au-dessous de la partie de transport (7) et dans le cas d'un second entraînement à moteur linéaire situé au-dessus de celle-ci, l'entraînement à moteur linéaire supérieur présente une puissance maximale qui est inférieure à 70 %, en particulier inférieure à 60 %, 50 %, 40 %, 30 % et particulièrement inférieure à 20 % de la puissance de l'entraînement à moteur linéaire inférieur.

11. Installation de transport selon l'une des revendications 1 à 10, **caractérisée en ce qu'**un caisson à buses (NB) respectif est agencé au-dessus et au-dessous de l'unité de transport à pinces (KT), et uniquement dans le vas d'un seul entraînement à moteur linéaire prévu au-dessous ou au-dessus de l'unité de transport à pinces (KT), la table à pinces (25e) destinée à serrer une bande à transporter (F) entre les caissons à buses (NB) supérieur et inférieur est agencée au milieu ou est agencée à un écart de celui-ci qui est de moins de 10 %, en particulier moins de 9 %, 8 %, 7 %, 6 %, 5 %, 4 %, 3 %, 2 % ou moins de 1 % par rapport à la distance totale (B) entre les caissons à buses (NB) supérieur et inférieur.

12. Installation de transport selon l'une des revendications 1 à 11, **caractérisée en ce que** la distance entre les caissons à buses (NB) supérieur et inférieur, entre lesquels est agencée l'unité de transport à pinces (KT) au moyen l'entraînement à moteur linéaire prévu uniquement au-dessous ou uniquement au-dessus de l'unité de transport à pinces (KT), est inférieure à 700 mm, en particulier inférieure à 600 mm, 500 mm, 400 mm, 300 mm, 250 mm, 200 mm et en particulier inférieure à 175 mm et de préférence comprise entre 150 mm et 700 mm.

Fig. 1a

EP 3 022 042 B1

Fig. 1b

**Fig. 2**

Fig. 3

Fig. 4

Fig. 5

EP 3 022 042 B1

Fig. 6a

Fig. 6b

24

Fig. 7

Fig. 8

NB

c

d

G

FE

NB 502

Fig. 9

Fig. 10

Fig. 11

**IN DER BESCHREIBUNG AUFGEFÜHRTE DOKUMENTE**

**In der Beschreibung aufgeführte Patentdokumente**

- DE 4436676 C2
- EP 0471052 B1
- WO 8912543 A1
- DE 4441020 C1
- EP 0422035 B1
- EP 0455632 B1
- JP 2002103445 A